# FASCICULE DE BREVET EUROPEEN

(11) **EP 2 480 630 B1**
(45) Date de publication et mention de la délivrance du brevet: **16.04.2014**
(21) Numéro de dépôt: 10754735.8
(22) Date de dépôt: 15.09.2010
(51) Int. Cl.: C09K 19/40

(54) **MATERIAU COMPOSITE UTILISANT UN ELASTOMERE MESOMORPHE ET SON PROCEDE DE FABRICATION**
VERBUNDWERKSTOFF MIT EINEM MESOMORPHEM ELASTOMER UND HERSTELLUNGSVERFAHREN DAFÜR
COMPOSITE MATERIAL USING A MESOMORPHIC ELASTOMER, AND METHOD FOR MAKING SAME

(30) Priorité: 23.09.2009 FR 0956547
(43) Date de publication de la demande: 01.08.2012
(73) Titulaire: Polymage, 06000 Nice (FR)
(72) Inventeur: SIXOU, Pierre, F-06000 Nice (FR); SAUVANIER, David, F-06000 Nice (FR); MINETTO, Anthony, F-06000 Nice (FR); GANDOLFO, Viviane, F-06000 Nice (FR)
(74) Mandataire: Brizio Delaporte, Allison
(86) Numéro de dépôt international: PCT/EP2010/063566
(87) Numéro de publication internationale: WO 2011/036080

(56) Documents cités:
- WO-A1-00/04110
- US-A- 6 040 411
- US-A1- 2005 242 325
- US-A1- 2007 007 492
- US-A1- 2007 108 407
- US-B1- 7 122 229
- ZHANG B-Y ET AL: "PREPARATION AND PROPERTIES OF SILOXANE LIQUID CRYSTALLINE ELASTOMERS WITH A MESOGENIC CROSSLINKING AGENT", LIQUID CRYSTALS, TAYLOR AND FRANCIS, ABINGDON, GB LNKD- DOI:10.1080/02678290410001648697, vol. 31, no. 3, 1 mars 2004 (2004-03-01), pages 339-345, XP001190087, ISSN: 0267-8292
- ZHANG B-Y ET AL: "MESOMORPHIC PROPERTIES OF LIQUID CRYSTALLINE POLYSILOXANES AND ELASTOMERS BASED ON A TRI-VINYL CROSSLINKER", LIQUID CRYSTALS, TAYLOR AND FRANCIS, ABINGDON, GB LNKD- DOI:10.1080/026782903100010721, vol. 30, no. 9, 1 septembre 2003 (2003-09-01), pages 1015-1019, XP001169717, ISSN: 0267-8292
- KUPFER J ET AL: "DENSELY CROSSLINKED LIQUID SINGLE-CRYSTAL ELASTOMERS", POLYMERS FOR ADVANCED TECHNOLOGIES, WILEY & SONS, BOGNOR REGIS, GB LNKD- DOI:10.1002/PAT.1994.220050205, vol. 5, no. 2, 1 février 1994 (1994-02-01) , pages 110-115, XP000429309, ISSN: 1042-7147
- SEMMLER K ET AL: "ORIENTATION OF A CHIRAL SMECTIC C ELASTOMER BY MECHANICAL FIELDS", POLYMERS FOR ADVANCED TECHNOLOGIES, WILEY & SONS, BOGNOR REGIS, GB LNKD- DOI:10.1002/PAT.1994.220050405, vol. 5, no. 4, 1 avril 1994 (1994-04-01), pages 231-235, XP000440281, ISSN: 1042-7147
- LACEY D ET AL: "ORIENTATION EFFECTS IN MONODOMAIN NEMATIC LIQUID CRYSTALLINE POLYSILOXANE ELASTOMERS", JOURNAL OF MATERIALS CHEMISTRY, THE ROYAL SOCIETY OF CHEMISTRY, CAMBRIDGE, GB LNKD- DOI:10.1039/A705570F, vol. 8, no. 1, 1 janvier 1998 (1998-01-01) , pages 53-60, XP000736624, ISSN: 0959-9428
- OEGE T ET AL: "MANIPULATION OF THE FERROELECTRICITY IN LC POLYMERS VIA PHOTOMECHANICAL ISOMERIZATION OF AZOBENZENE MOIETIES", MACROMOLECULAR CHEMISTRY AND PHYSICS, WILEY-VCH VERLAG, WEINHEIM, DE LNKD- DOI:10.1002/MACP.1996.021970602, vol. 197, no. 6, 1 juin 1996 (1996-06-01), pages 1805-1813, XP000634255, ISSN: 1022-1352

## Description

La présente invention concerne un cristal liquide élastomère, son procédé de fabrication et un matériau composite adaptatif formé à partir d'un tel cristal liquide élastomère.

L'invention trouvera particulièrement son application dans des secteurs très différents tels que le médical, les textiles, l'aéronautique et l'automobile, la défense, les objets de loisirs et grand public, l'optique, le solaire, qui utilisent des matériaux et composants miniaturisés ou de grandes dimensions ayant des fonctionnalités diverses.

Les matériaux adaptatifs sont des matériaux qui réagissent à leur environnement en fournissant une réponse optique, électrique, mécanique, thermique, chimique lorsqu'ils sont soumis respectivement à une contrainte qui est elle-même d'origine optique, électrique, mécanique, thermique ou chimique. Ils sont appelés auto-adaptatifs lorsque la contrainte et la réponse sont de même nature, et contrôlables lorsqu'elles sont de nature différente.

Les matériaux composites sont couramment utilisés dans les industries telles que l'automobile ou l'aéronautique pour améliorer les propriétés des matériaux, le plus souvent au niveau mécanique. Les composites utilisés sont souvent « statiques » cela signifie que leurs propriétés ne peuvent se modifier à façon en particulier lorsque l'environnement du composite varie.

On connaît encore relativement peu de composites adaptatifs. Les plus connus ne concernent que les propriétés mécaniques. Les composites à propriétés optiques ou électriques sont rarement considérés.

Le PVDF (polyfluorure de vinylidène) et ses copolymères sont les matériaux polymères les plus utilisés comme capteurs ou actuateurs dans les composites adaptatifs. Ils donnent des réponses rapides mais ont l'inconvénient majeur de ne permettre qu'un déplacement limité, en général inférieur au pourcent. En tant que capteurs, ils fournissent une réponse électrique alors qu'une réponse optique (visuelle) est souvent nécessaire dans beaucoup d'applications.

Les autres matériaux à base de polymères conducteurs, gels polymères ioniques et IPMC (lonic Metal Polymer Composites) sont considérés, de part leur fonctionnement et leurs caractéristiques, comme des systèmes analogues. Les matériaux à base de systèmes polymères ioniques offrent des performances et des capacités à longs termes trop défavorables pour être intéressantes. De plus, il est difficile de réduire le temps de réponse parce que le phénomène régissant la vitesse d'actionnement (diffusion ionique dans un polymère) est intrinsèquement lent.

Une autre catégorie, les polymères électrostrictifs ont deux inconvénients : d'une part les élongations et déformations obtenues restent faibles et d'autre part, l'actionnement de ce type de dispositif nécessite des tensions hautes.

Enfin les élastomères diélectriques sont très intéressants à tous points de vue mais leur inconvénient majeur est la nécessité d'utiliser de très hautes tensions pour leur actionnement (Kilovolt sur quelques microns), ce qui les rend inutilisables dans la quasi totalité des applications concernant les composites.

Le document ZHANG B-Y et AL « Preparation and properties of siloxane liquid crystalline elastomers with a mesogenic crosslinking agent », Liquid crystals, Taylor and Francis, Abingdon, GB LNKD DOI: 10.1080/02678290410001648697, vol. 31, no3, 1 mars 2004 (2004-03-01), pages 339-345, XP001190087, ISSN/ 0267-8292, montre un procédé de preparation d'élastomère avec un agent de liaison mésogène.

Le document ZHANG B-Y et AL « Mesomorphic properties of liquid crystalline polysiloxanes and elastomers based on a tri-vinyl crosslinker », Liquid crystals, Taylor and Francis, Abingdon, GB LNKD DOI: 10.1080/026782903100010721, vol. 30, no.9, 1 septembre 2003 (2003-09-01), pages 1015-1019, XP001169717, ISS: 0267-8292, porte sur des polymères à réseaux de cristaux liquides avec un monomère de liaison tri-vinyle non mésogène.

La publication KUPFER J et AL: « Densely croslinked liquid single-crystal elastomers », polymers for advanced technologies, Wiley & Sons, Bognor Regis, GB LNKD DOI: 10.1002/PAT.1994.220050205, vol. 5, no. 2, 1 février 1994 (1994-02-01), pages 110-115, XP000429309, ISSN: 1042-7147, présente des cristaux liquides élatomères.

Le document SEMMLER K et AL: « Orientation of a chiral smectic c elastomer by mechanical fields », polymers for advanced technologies, Wiley & Sons, Bognor Regis, GB LNKD DOI: 10.1002/PAT.1994.220050405, vol. 5, no. 4, 1 avril 1994 (1994-04-01), pages 231-235, XP000440281, ISSN: 1042-7147, divulgue aussi des élastomères, ici du type smectique chiral et l'effet d'application de contraintes mécaniques sur ceux-ci.

La publication LACEY D et AL: « Orientation effects in monodomain nematic liquid crystalline polysiloxane elastomers », Journal of material chimistry, The Royal Society of Chimistry, Cambridge, GB LNKD-DOI:10.1039/A705570F, vol.8, no. 1, 1 janvier 1998 (1998-01-01), pages 53-60, XP000736624, ISSN: 0959-9428, présente des cristaux liquides élastomères basés sur un polysiloxane.

Le document US-A1-2005242325 présente des élastomères à mémoire de forme ayant une chaîne principale du type « smectique C ».

Le document US-b1-6040411 traite d'organosiloxanes à température vitreuse basse.

Le document OEGE et AL: « Manipulation of the ferroelectricity in LC polymers via photomechanical isomerization of azobenzen moieties », Macromolecular chemistry and physics, wyley-vch verlag, Weinheim, DE LNKD-DOI: 10.1002/MACP. 1996.021970602, vol. 197, no. 6, 1 juin 1998 (1996-06-01), pages 1805-1813, XP000634255, ISSN: 1022-1352 divulgue un copolymère à chaîne latérale cristal liquide ferroélectrique.et son application sous illumination déterminée.

WO-A-2007 0007 492 montre une méthode pour fabriquer une composition cristal liquide, avec un polymère siloxane.

US-A1-2007/0108407 présente une membrane à activation contrôlée. La membrane comprend au moins un film de cristal liquide élastomère. Un changement de forme de la membrane est contrôlable par un champ électrique.

Les critères importants pour le choix d'un matériau polymère adaptatif pour la réalisation de composites concernent les propriétés mécaniques (force et déplacement maximum, module) et thermo, opto ou électromécaniques (efficacité, temps de réponse) mais aussi la durée de vie, la possibilité de mise en forme aisée à des échelles diverses (très petites ou très grandes), le recyclage, le coût...

Les matériaux basés sur les élastomères cristaux liquides présentent des performances remarquables (déplacement pouvant aller jusqu'à 400%, force supérieure à plusieurs MPa, temps de réponse de l'ordre de la seconde) et surtout des capacités satisfaisantes de fonctionnement sur le long terme.

Néanmoins, il existe le besoin de proposer des cristaux liquides élastomères alternatifs pour former des matériaux composites nouveaux présentant des propriétés améliorées.

A cet effet, la présente invention concerne un matériau composite adaptatif selon la revendication 1.

Dans un mode de réalisation particulier non limitatif, au moins un cristal liquide élastomère comprenant au moins un mésogène est caractérisé en ce que le mésogène est du type de la formule I : 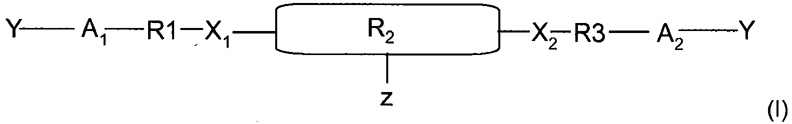
Y représenté un propène, un éther vinylique ou est nul, R₂ est choisi parmi un groupement phényle ou un groupement biphényle avec deux oxygènes en position para l'un de l'autre, A₁ et A₂ sont choisis indépendamment l'un de l'autre parmi un groupement cyano ou une chaîne alkyl linéaire de longueur variable de n-methyl à n-tétradécyl comportant aucun ou un ou deux centres asymétriques en alpha d'un oxygène aromatique et/ou d'une fonction ester comportant une chaîne aliphatique de un à quatre carbones. Si Y est un propène la fonction cyano est exclue, R₁ et R₃ sont choisis indépendamment l'un de l'autre et sont nuls ou choisis parmi un phényle ou un O-phényle ou un cyclohexyl ou un phényle substitué par un groupement nitro ou métoxy placé en ortho des groupements A₁ ou A₂, X₁ et X₂ sont choisis indépendamment l'un de l'autre parmi une fonction éther, une fonction ester ou un groupement azo, Z est nul ou représente 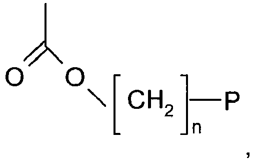 P groupement polymérisable, est choisi parmi un groupement éthylénique ou éther vinylique, ou de type acrylique quand Y est nul, ou parmi une fonction alcool ou méthyle quand Y est un propène ou un éther vinylique, n est compris entre 2 et 10.

Selon des variantes préférées mais non limitatives, le cristal liquide élastomère est tel que :
- Il comprend au moins une chaîne de polymère liée à au moins un mésogène.
- La chaîne de polymère est un polysiloxane.
- Le mésogène est situé dans la chaîne de polymère de sorte que le cristal liquide élastomère est dit à chaîne principale.
- Le mésogène est greffé latéralement à la chaîne de polymère de sorte que le cristal liquide élastomère est dit à chaîne latérale en haltère.
- Le mésogène et/ou la chaîne polymère comprend au moins un agent de réticulation photochimique ou un agent de réticulation chimique.
- Le mésogène est nématique ou cholestérique.

L'invention concerne un procédé de fabrication d'un matériau composite adaptatif tel que décrit ci-dessus caractérisé par le fait qu'il comprend :
- Une première activation du matériau composite générant une contraction, une torsion ou un enroulement irréversible,
- Au moins une activation ultérieure du matériau composite générant une contraction ou une torsion ou un enroulement réversible et contrôlable qui s'ajoute à la première.

L'invention concerne également un procédé de fabrication d'un matériau composite adaptatif de l'invention, selon la revendication 16.

Dans un mode de réalisation particulier, la fabrication d'un cristal liquide élastomère telle que décrite précédemment est caractérisée par le fait qu'elle comprend au moins une étape de réticulation chimique ou photochimique d'au moins deux mésogènes selon la formule I.

Selon des variantes préférées mais non limitatives, le procédé est tel que :
- il comprend au moins une étape préliminaire d'hydrosylilation d'au moins un mésogène selon la formule (I) et d'au moins une chaîne de polymère polysiloxane.
- au moins un mésogène comprend au moins une fonction réticulable.
- au moins une chaîne polymère comprend au moins une fonction réticulable.
- il comprend une étape de mise en forme comprenant au moins une étape de polymérisation partielle suivie d'au moins une étape de déformation mécanique suivie d'au moins une étape de polymérisation totale.
- les polymérisations sont effectuées en phase anisotrope.
- il comprend une étape d'élévation de la température en phase anisotrope sensiblement en-dessous de la température de transition anisotrope-isotrope pour contrôler l'orientation du cristal liquide élastomère.
- le cristal liquide élastomère est placé sur une ou entre deux lames traitées pour obtenir un ancrage planaire.
- il comprend une étape de mise en forme comprenant une étape de filage dans laquelle la température de filage et l'étirement mécanique sont fonction l'un de l'autre.
- la température d'étirement post-filage et l'étirement mécanique post-filage sont fonction l'un de l'autre.

Selon le procédé de fabrication d'élastomère cristal liquide de l'invention le réglage de la dépendance entre l'action mécanique de mise en forme et la température de mise en forme permet d'obtenir des élastomères cristaux liquides et des matériaux composites adaptatifs qui en sont directement issus, activables et contrôlables de façon réversible et dont le taux d'actuation et l'efficacité sont nettement améliorés par rapport à celui des élastomères cristaux liquides classiques.

Selon des variantes préférées mais non limitatives, le matériau composite adaptatif est tel que :
- il comprend un actuateur configuré pour faire passer le cristal liquide élastomère d'un premier état physique anisotrope à un deuxième état physique isotrope.
- Le renfort et la matrice sont des films.
- Il comprend une fonction d'actuateur sur tout ou partie de lui-même de sorte à effectuer une contraction ou une torsion ou un enroulement prédéterminé, réversible et contrôlable lorsqu'il est activé.
- Il subit une contraction irréversible lors de sa première activation et une contraction réversible et contrôlable, qui s'ajoute à la première, lors de toutes les activations suivantes.
- Il comprend une fonction de capteur sur tout ou partie de lui-même de sorte à présenter une réflexion de la lumière ajustable dans les domaines de l'Ultra violet, du visible ou de l'Infra-Rouge et modifiable par une contrainte mécanique.
- Le renfort ou la matrice est un cylindre creux.
- La matrice ou le renfort est une fibre et le renfort ou la matrice est une gaine d'élastomère.
- La matrice ou le renfort est un fil.
- Il forme un textile comprenant une activation contrôlable et réversible de ses dimensions.

Les cristaux liquides élastomères et les matériaux composites selon l'invention sont activables sur toutes leurs surfaces ou seulement une partie.

A titre illustratif et de manière non limitative on peut citer :
- un filament ou une corde formant un noeud dont on contrôle électriquement de manière réversible le resserrement,
- un tuyau dont on contrôle le resserrement en un point,
- une plaque dont on contrôle la rugosité ou la déformation sur des parties prédéterminées,

L'invention concerne un article textile tel qu'un non tissé, tissé, tricot, dont les dimensions sont activables et contrôlables de façon réversible. Cet article textile peut être réalisé uniquement à partir des matériaux issus de l'invention lesquels sont fonctionnalisés ou non. L'article textile peut également être constitué par un composite utilisant ces matériaux avec tous les composants habituellement utilisés dans les textiles et composites textiles tels que les fibres, fils, enductions, fonctionnalisés ou non. La fonctionnalisation porte sur tout type de propriétés et en particulier sur la conduction.

Un autre objet de l'invention est un film composite dont la torsion autour d'un axe est activable et contrôlables de façon réversible,

Encore un autre objet de l'invention concerne des films et des fibres composites et des objets plus complexes obtenus directement à partir de ceux-ci, tels que des articles textiles non tissés, tissés ou tricotés qui peuvent être utilisés comme activateurs ou capteurs, et dont les propriétés optiques, et en particulier la couleur, sont une fonction réversible de la déformation qu'ils subissent. Ces films, fibres composites et objets plus complexes obtenus directement à partir de ceux-ci peuvent également combiner les fonctions d'activateur et de capteur.

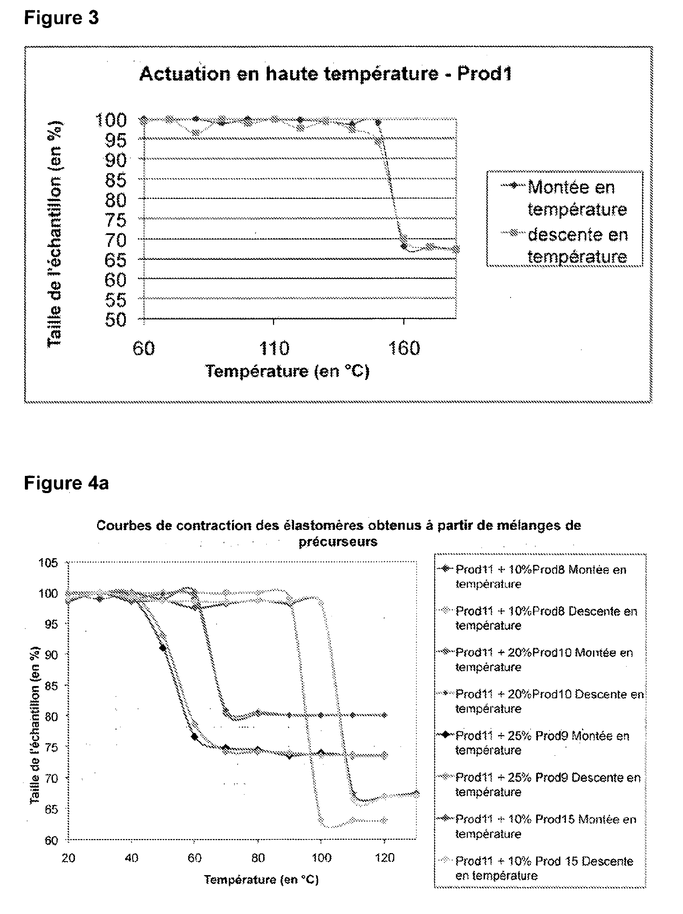

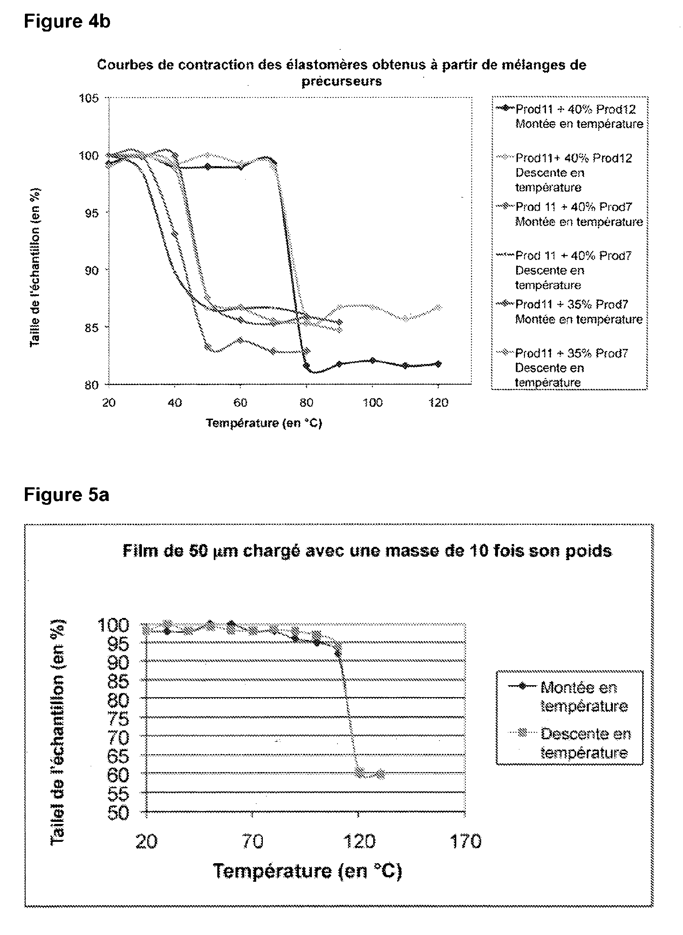

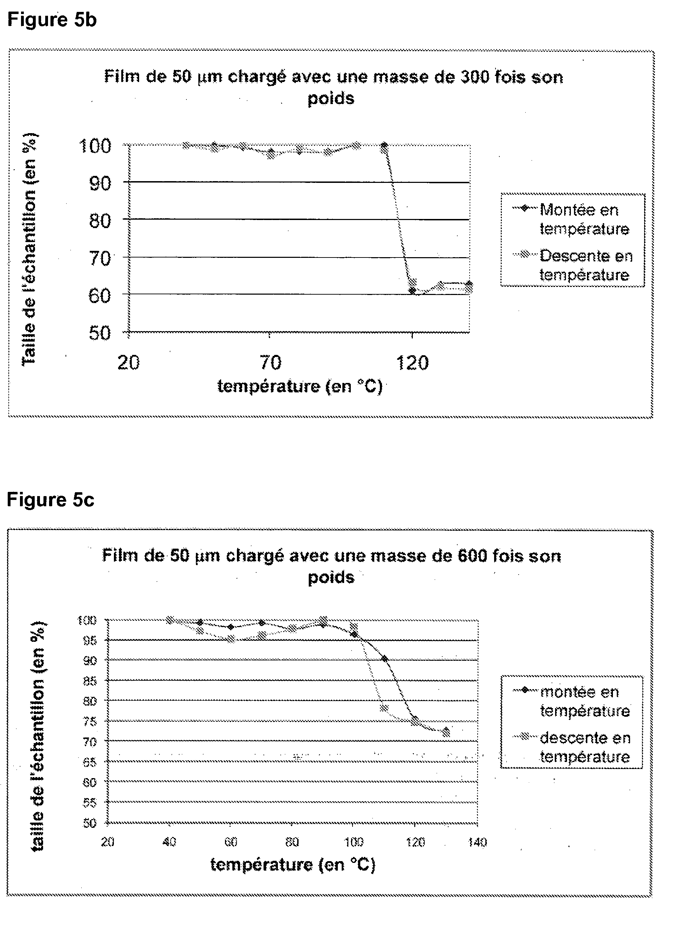

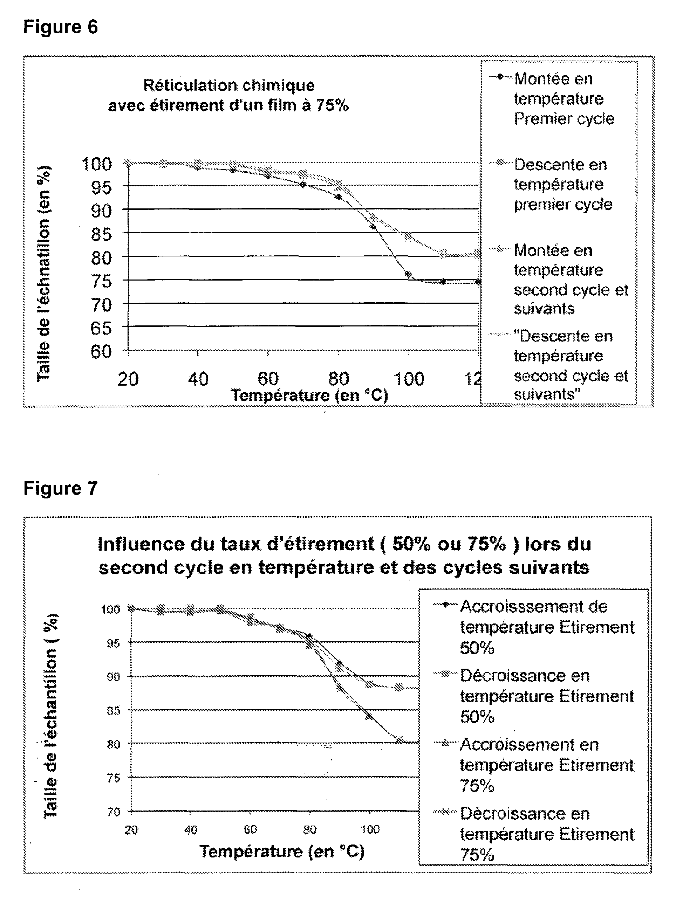

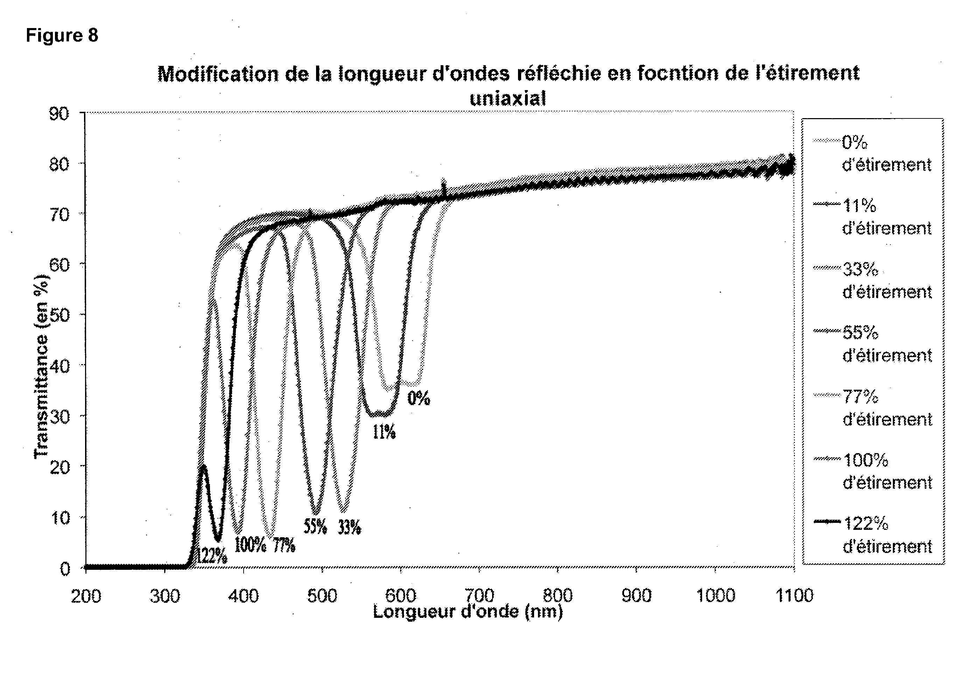

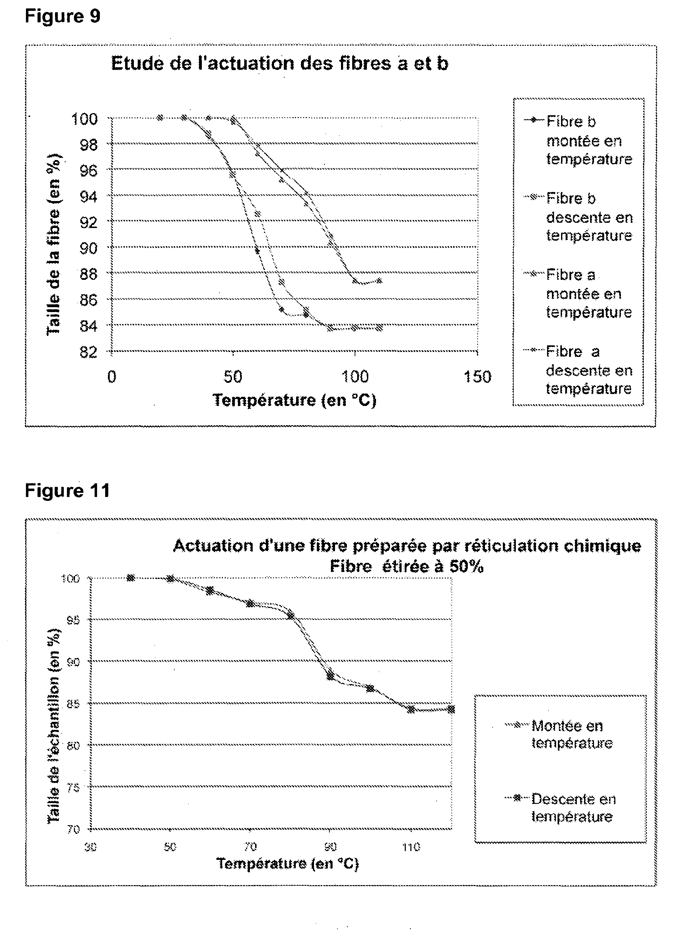

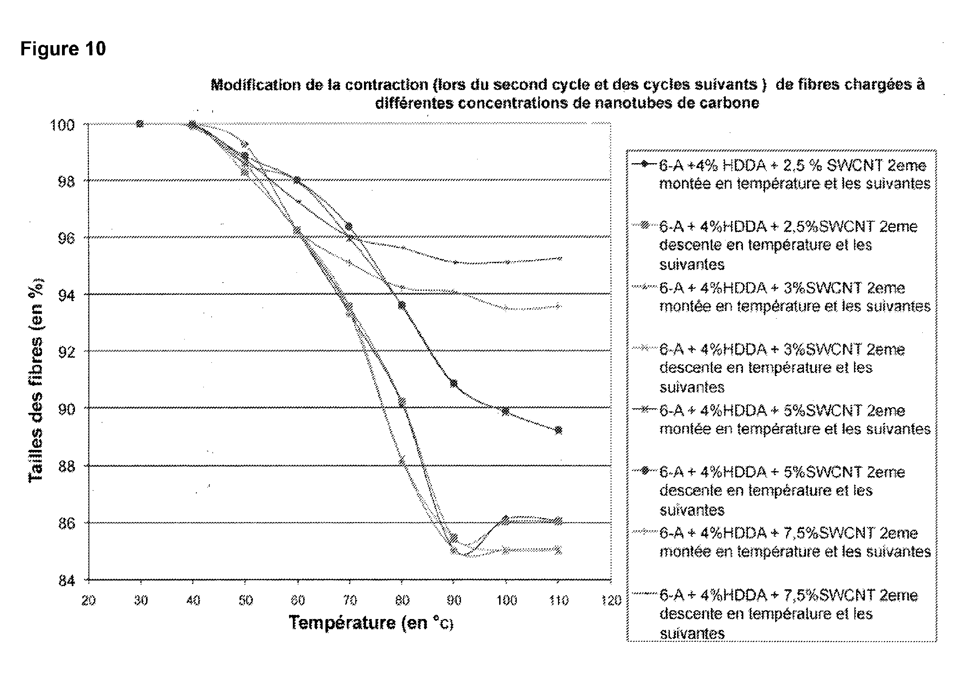

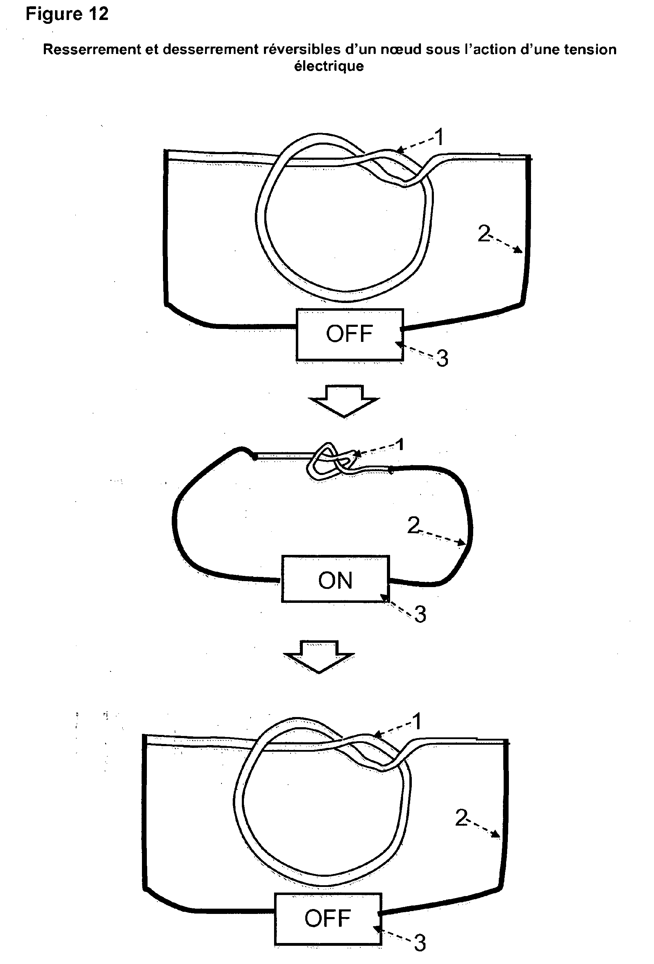

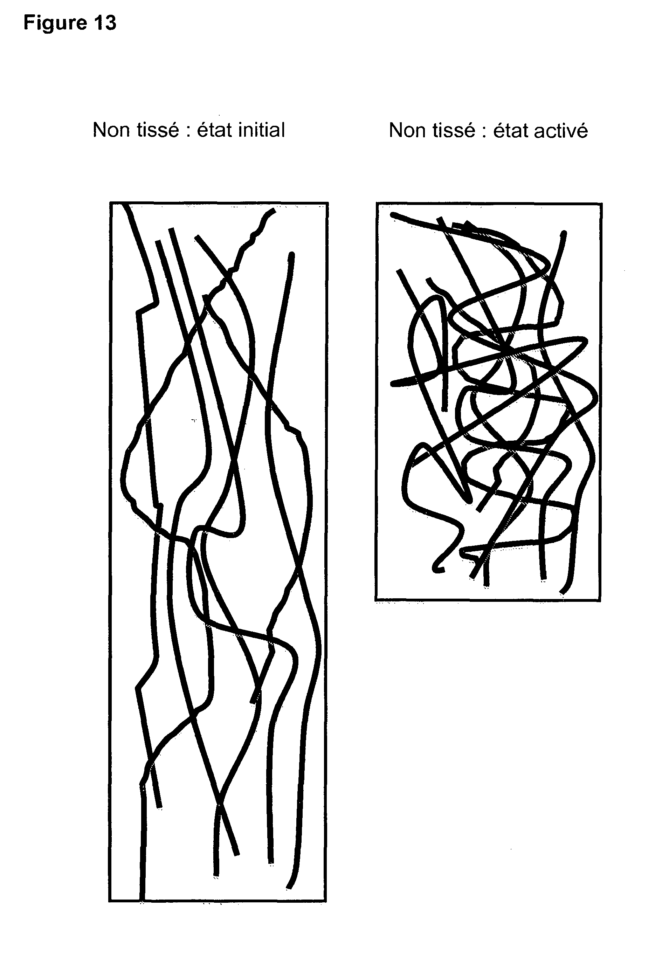

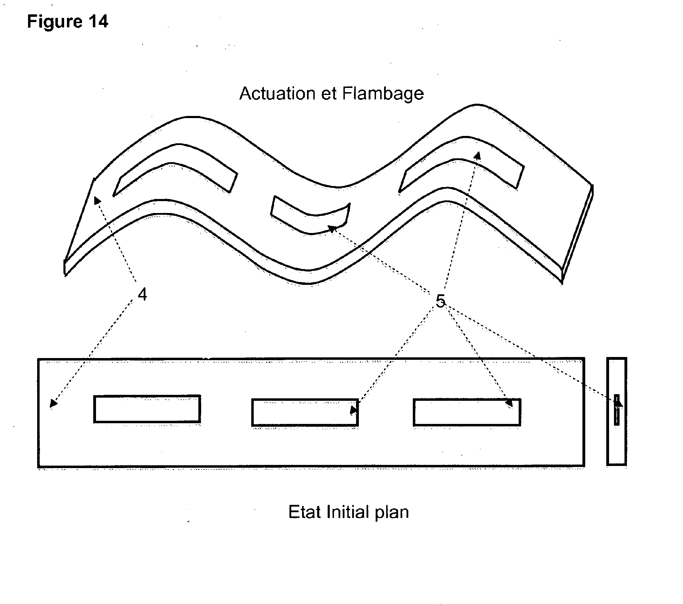

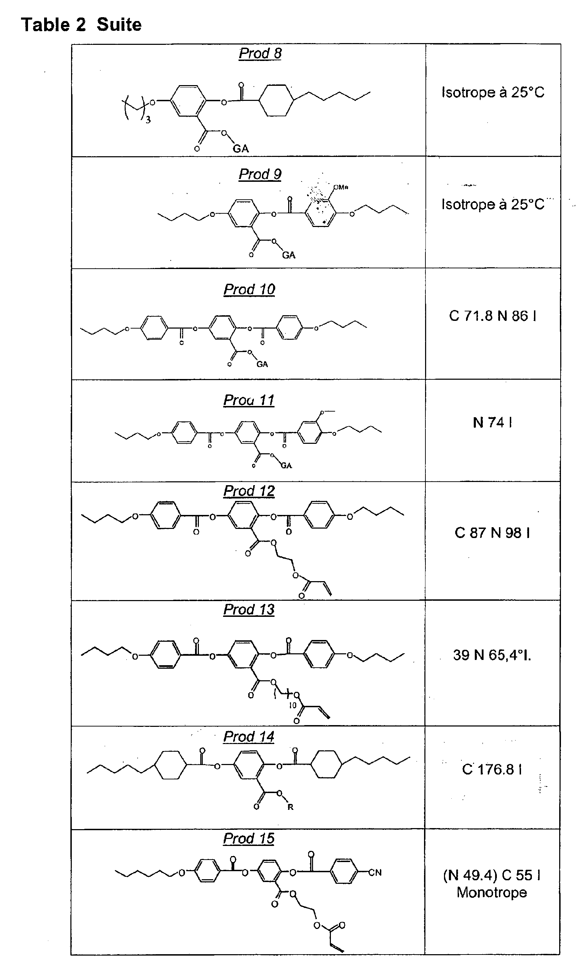

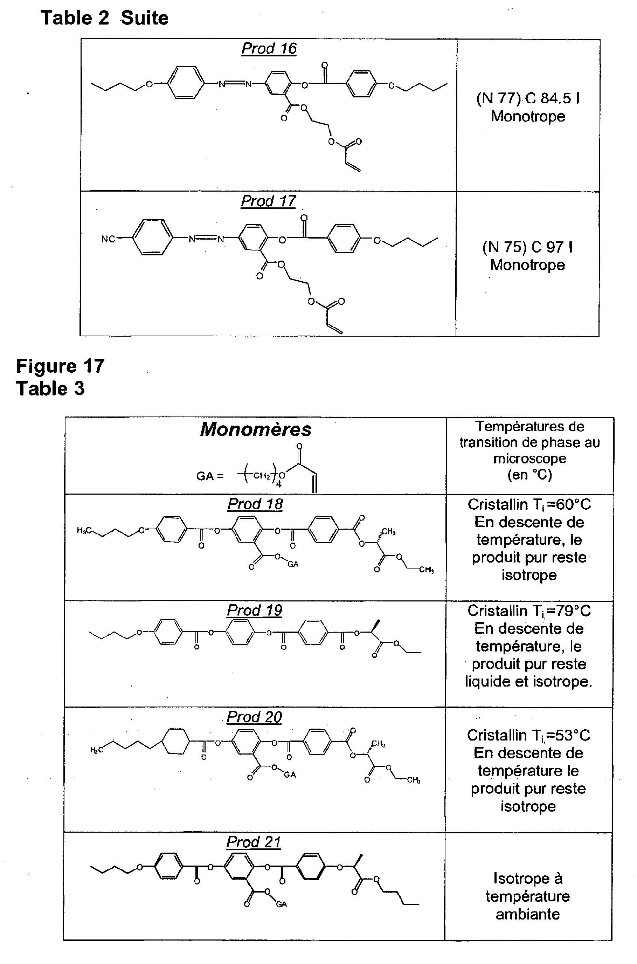

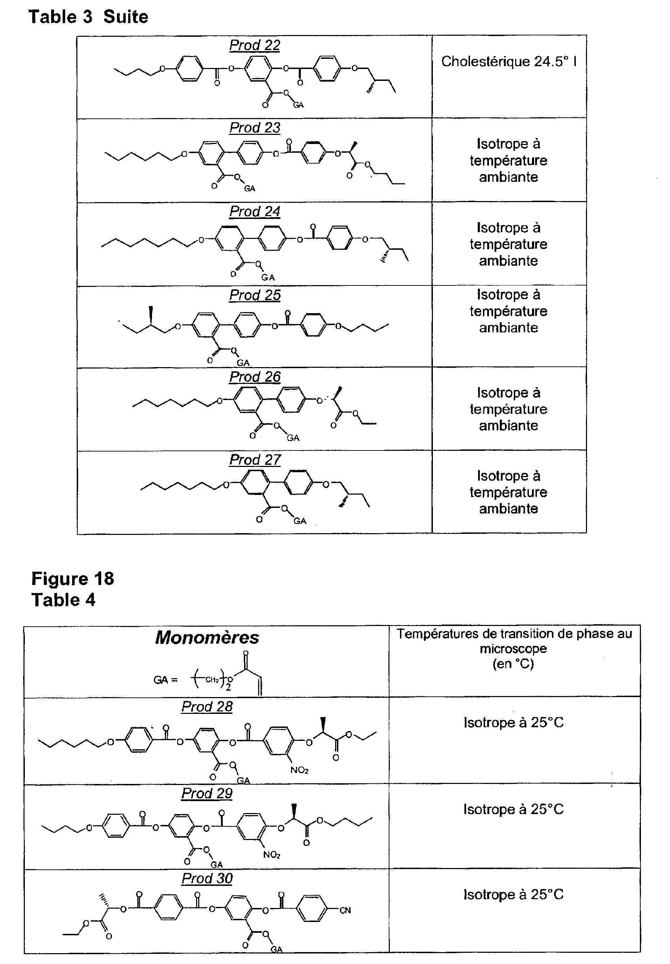

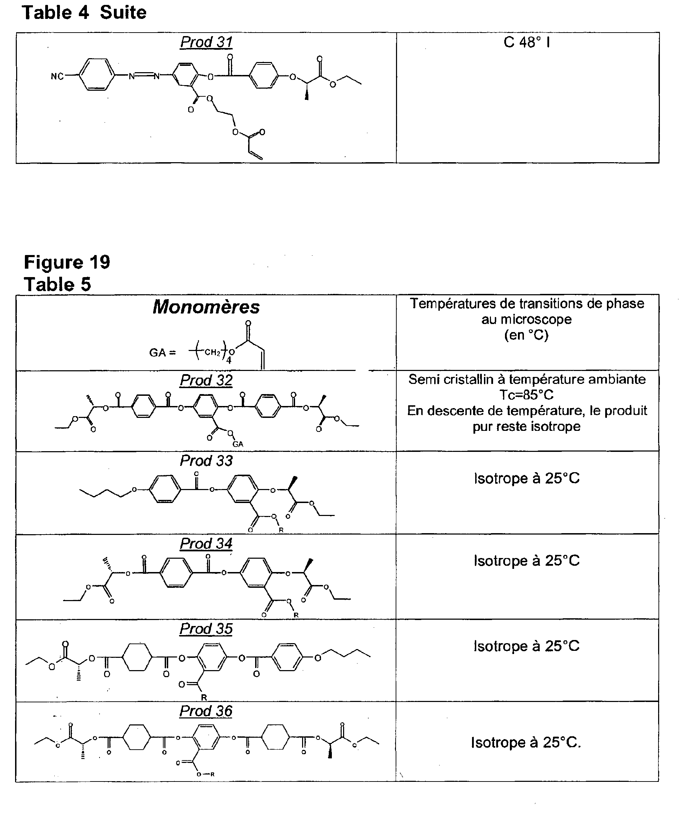

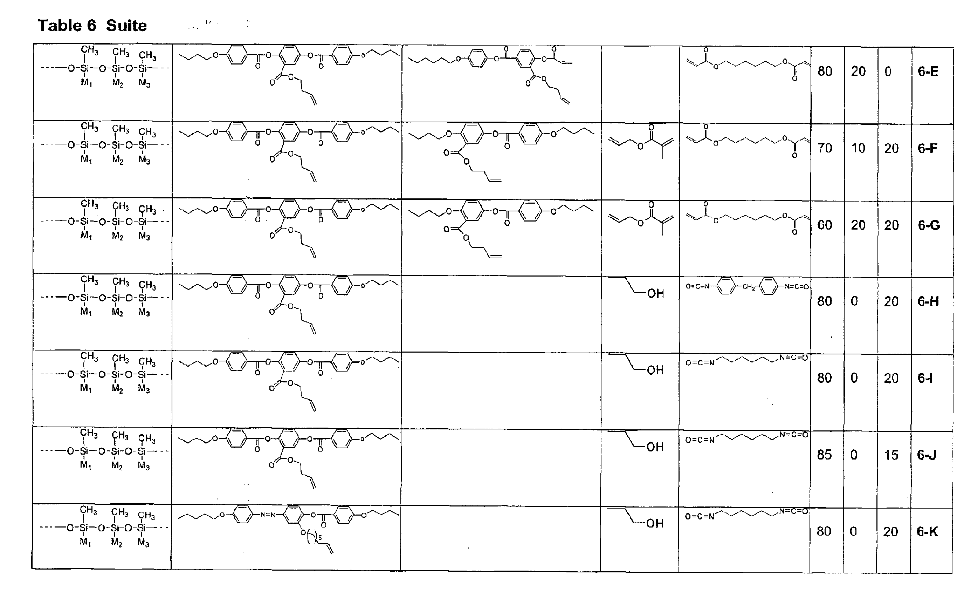

Les propriétés des cristaux liquides élastomères sont grandement améliorées par l'inclusion de charges en particulier nanométriques.

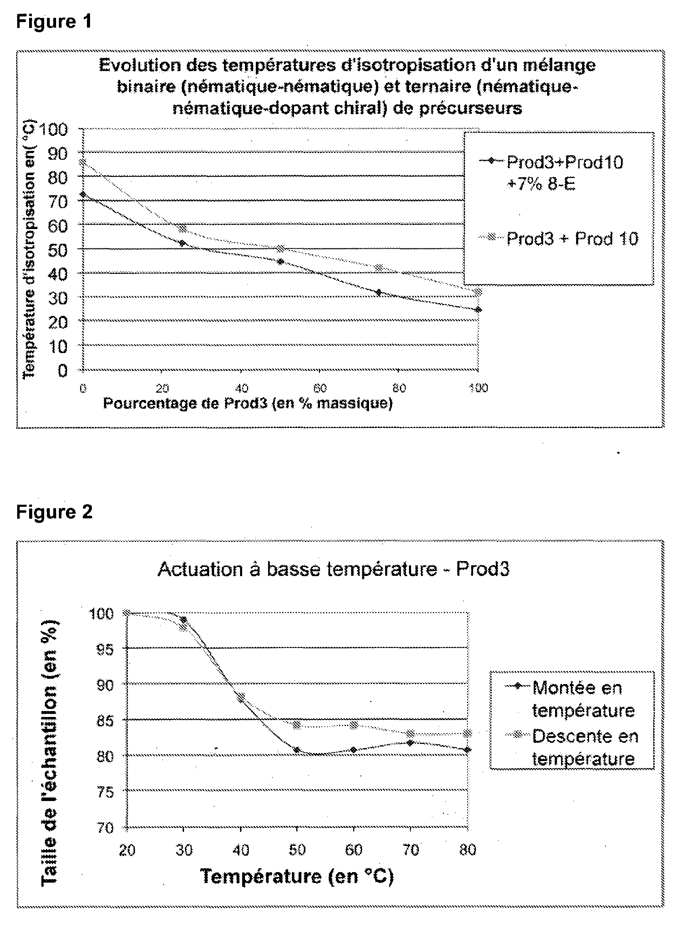

La **figure 1** montre l'évolution des températures d'isotropisation d'un mélange binaire de deux précurseurs d'élastomères cristaux liquides (**Cf. table 1**) ainsi que celle d'un mélange de ces deux précurseurs avec un dopant chiral (**Cf. table 8**) ici en concentration de 7%. L'utilisation de diagrammes de ce type permet d'ajuster de manière prédéterminée certaines caractéristiques des cristaux liquides élastomères objet de l'invention.
**La** **figure 2** montre la contraction réversible autour de la température ambiante d'un élastomère cristal liquide sous forme de film obtenu avec le précurseur Prod 4 dont la formule est donnée en **table 1**.
**La** **figure 3** montre la contraction réversible autour de la température de 160°C d'un élastomère cristal liquide sous forme de film obtenu avec le précurseur Prod 2 dont la formule est donnée en **table 1.**
**Les** **figures 4a** **et** **4b** montrent les contractions réversibles à différentes températures d'élastomères cristaux liquides obtenus sous forme de films avec des mélanges de précurseurs dont les formules sont données en **table 1**.
**Les** **figures 5a****,** **5b et 5c** montrent la contraction réversible autour de la température de 120°C d'un élastomère cristal liquide sous forme de film de 50 microns lorsqu'il est chargé successivement avec une masse de 10 (5a), 300 (5b), 600 (5c) fois son propre poids. Il est possible de constater sur ces diagrammes que l'efficacité et la température de transition de l'actuation ne sont pas modifiées malgré une charge importante.
**La** **figure 6** montre la contraction d'un film élastomère cristal liquide dont la réticulation a été effectuée en deux temps : pré-réticulation initiale puis étirement du film à 75% et réticulation totale. Une première contraction irréversible est obtenue lors du premier cycle et une seconde contraction réversible inférieure à la première est obtenue lors du second cycle et des cycles suivants.

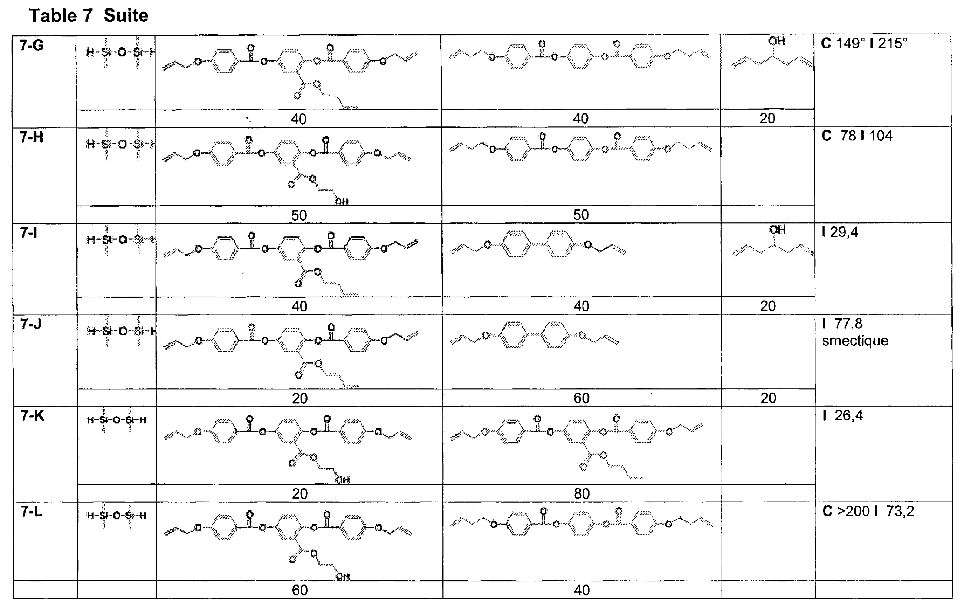

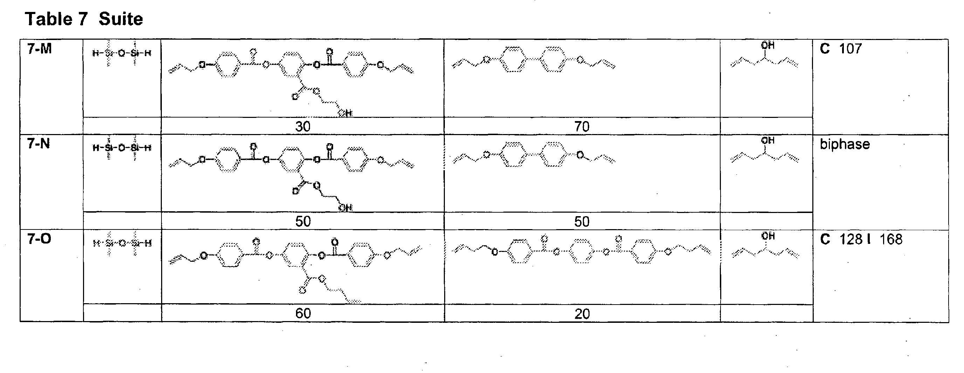

La **figure 7** montre la comparaison entre les contractions réversibles (donc observées lors du second cycle de chauffage et des suivants) de deux films élastomères cristaux liquides dont les réticulations ont été effectuées en deux temps : pré-réticulation initiale puis étirement du film (à 50%pour le premier film et 75% pour le second) et réticulation totale. Il est observable que la contraction réversible est d'autant plus importante que l'étirement du film entre les deux périodes de réticulation est important.
**La** **figure 8** montre la modification de couleur à température de 25°C d'un film élastomère cristal liquide cholestérique, selon l'invention, sous l'effet d'une traction. Une traction de 120% produit la modification de la réflexion du film lequel passe alors du rouge au bleu.
**La** **figure 9** montre la rétractation d'une fibre fabriquée avec un copolymère polysiloxane greffé (**M1**) (**M2**) (**M3**) dont on a modifié les proportions relatives des groupements **M1, M2, M3** (**tableau 6**). **M1 et, M2,** sont des mésogènes décrits par la formule (I). **M3** est un groupement portant une fonction réticulable chimiquement. On observe nettement une modification des températures de rétractation et de l'amplitude de la rétractation entre les fibres a (proportions relatives **M1, M2, M3** 80/20/0) et les fibres **b** (proportions relatives **M1, M2, M3** 70/10/20).
**La** **figure 10** montre la contraction réversible lors du second cycle et des suivants d'une fibre élastomère cristal liquide, selon l'invention, chargée avec différents pourcentages de nanotubes de carbone multifeuillets. L'augmentation de la concentration de nanotubes multifeuillets diminue le taux d'actuation réversible de la fibre.
**La** **figure 11** montre la contraction réversible lors du second cycle et des suivants d'une fibre élastomère cristal liquide selon l'invention préparée par réticulation chimique.
**La** **figure 12** illustre le resserrement et le desserrement réversible d'une fibre composite, selon l'invention, par action d'une tension électrique (Références : 1 - fibre composite, 2- fil électrique, 3- circuit électrique.)
**La** **figure 13** illustre l'actuation réversible d'un textile composite non tissé selon l'invention.
**La** **figure 14** illustre la déformation réversible lors de l'actuation d'un film composite selon l'invention. (Références : 4 - Matrice, 5- renfort en cristal liquide élastomère.).

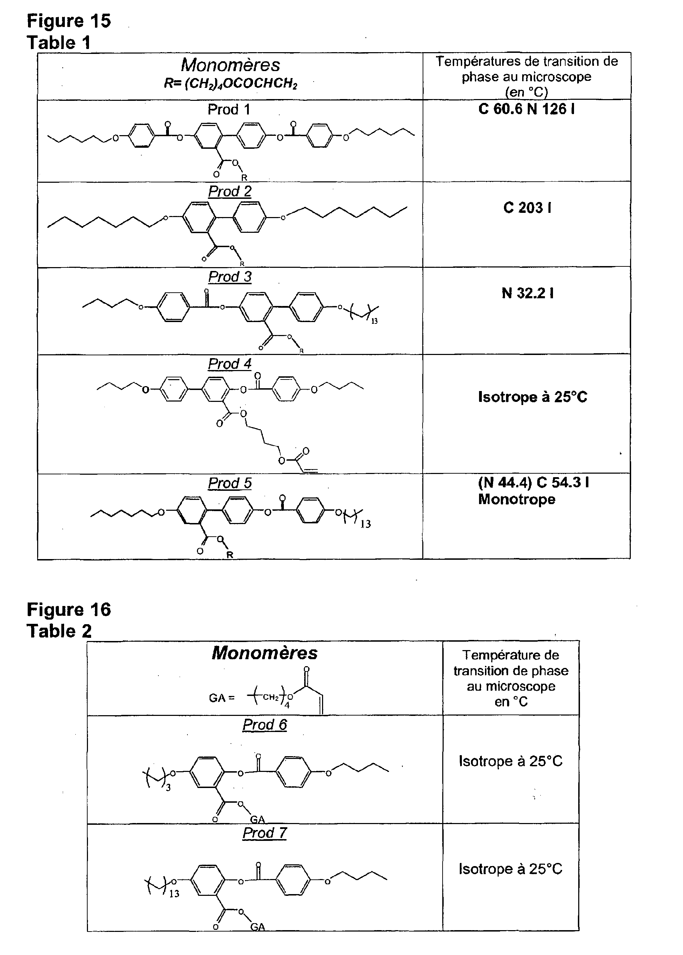

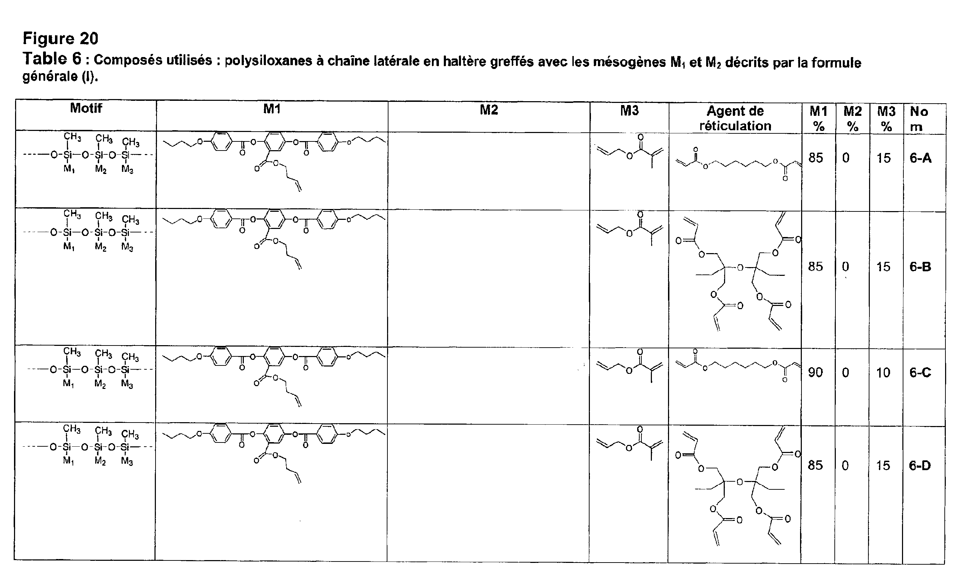

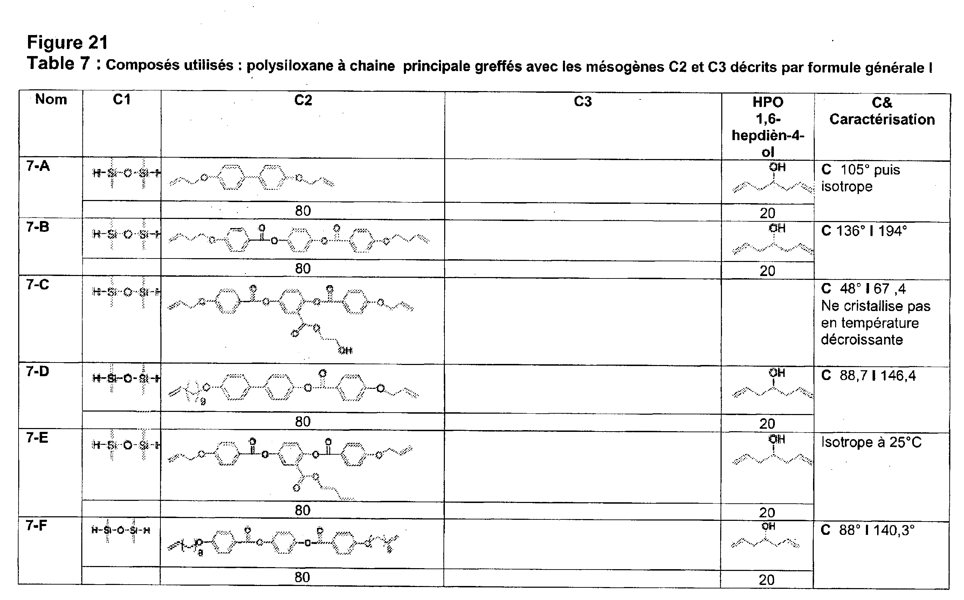

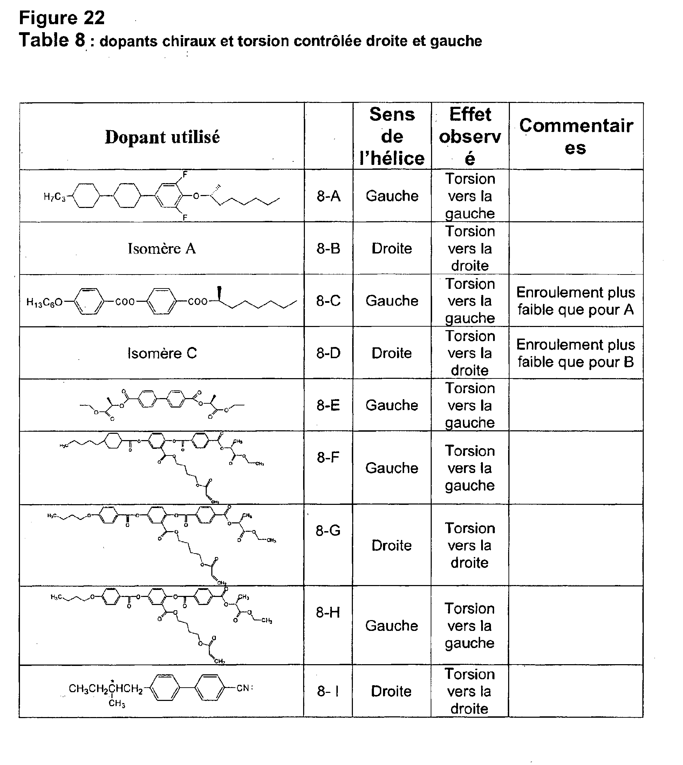

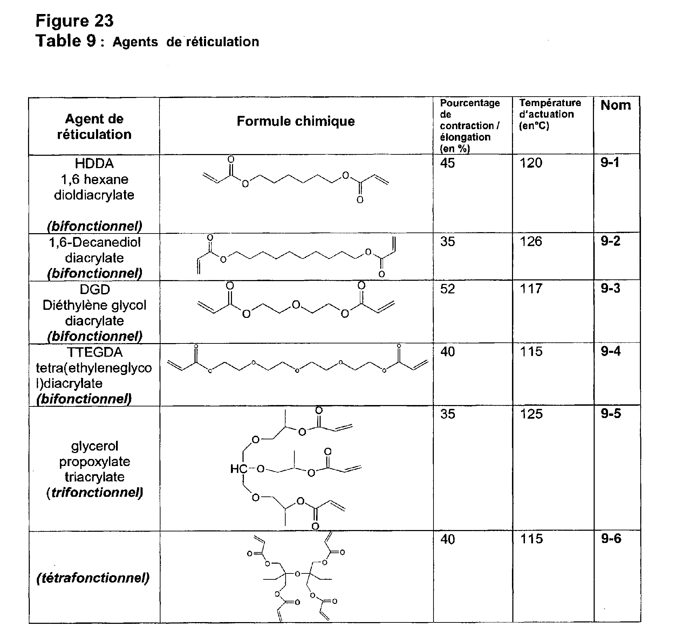

Les **figures 15 à 23** correspondent aux **tables 1 à 9** suivantes :
   Les **tables 1 et 2** montrent des mésogènes non chiraux utilisés pour réaliser des cristaux liquides élastomères présentant des propriétés d'actuateur.
   Les **tables 3, 4, 5** montrent des mésogènes chiraux utilisés pour réaliser des cristaux liquides élastomères présentant des propriétés de capteur.
   Les **tables 6 et 7** sont relatives respectivement à des polysiloxanes à chaîne latérale et à principale.
   La **table 8** donne des exemples de dopants chiraux utilisés pour réaliser des cristaux liquides élastomères.
   La **table 9** donne des exemples d'agents de réticulation utilisés pour réaliser des cristaux liquides élastomères.

Dans ces tableaux **C** désigne une phase cristalline, **I** une phase isotrope, **N** une phase nématique.

Les cristaux liquides élastomères sont des molécules combinant les propriétés élastiques des caoutchoucs et les propriétés anisotropes des cristaux liquides. Ils sont obtenus en reliant chimiquement des chaînes de polymères de cristaux liquides au moyen d'agents de réticulation. L'introduction de ces liaisons empêche l'écoulement des chaînes lorsque celles-ci sont soumises à une déformation mécanique et confère ainsi aux composés réticulés un caractère élastique. Les cristaux liquides élastomères sont donc formés à partir de monomères polymérisés.

Selon l'invention, les cristaux liquides élastomères comprennent au moins un mésogène de formule I.

Un mésogène est une substance capable de donner naissance à une mésophase (cristal liquide). Les mésogènes sont constitués de molécules ayant une partie rigide très anisotrope (oblongue ou plate) et une partie flexible souvent constituée par une chaîne aliphatique.

On entend ici par mésogène une molécule de forme oblongue contenant un ou plusieurs cycles tels que des cycles aromatiques ou cyclohexanes, substitués ou non par des groupements tels que les groupements méthyle, halogène, nitro, reliés entre eux en position para par des groupements tels les groupements ester, éther ou des fonctions azo associées ou non à des chaînes hydrocarbonées.

De nombreuses fonctionnalités peuvent être incluses dans les mésogènes, parmi celles-ci la chiralité droite ou gauche, introduite le plus souvent par l'intermédiaire de carbones asymétriques, la polarité obtenue grâce à des groupements polaires tels que les groupements cyano (CN) ou nitro (NO₂), le changement possible de conformation obtenu par des groupements azo (NN).

Plusieurs classes de mésogènes rentrent dans le cadre de l'invention pour former un cristal liquide élastomère selon l'invention.

La première classe est constituée par les composés de structure biphényle de formule I dont R₂ représente un motif biphényle avantageusement porteur d'une fonction polymérisable et P représente préférentiellement une fonction acrylate.

La **table 1** répertorie les propriétés de certains de ces monomères mésogènes.

D'autres structures mésogènes peuvent servir de base au cristal liquide élastomère de l'invention telles que celles issues d'une structure phényle. C'est-à-dire un mésogène de formule I dont R₂ est un groupement phényle avantageusement porteur d'une fonction polymérisable et P est préférentiellement une fonction acrylate.

Différents monomères mésogènes sont répertoriés dans la **table 2**.

De manière complémentaire, de nombreux composés possédant à leur périphérie un ou deux centres asymétriques sont également des mésogènes envisageables pour un cristal liquide élastomère selon l'invention. Dans ce cas, dans un mésogène de formule I, R₂ représente soit un phényle soit un biphényle, auquel est avantageusement reliée une fonction polymérisable et P est préférentiellement une fonction acrylate. A titre préféré, le ou les centre(s) asymétrique(s) sont portés par les groupements A₁ et/ou A₂ avantageusement en alpha d'un oxygène (aromatique) et/ou d'une fonction ester.

Le cristal liquide élastomère selon l'invention est formé par des précurseurs. Selon un premier mode de réalisation, le cristal liquide élastomère est formé par une pluralité de mésogènes comprenant au moins une fonction réticulable chimiquement ou photo-chimiquement de sorte à permettre une réticulation des mésogènes entre eux pour former un élastomère tel que représenté sur le **schéma 1a**.

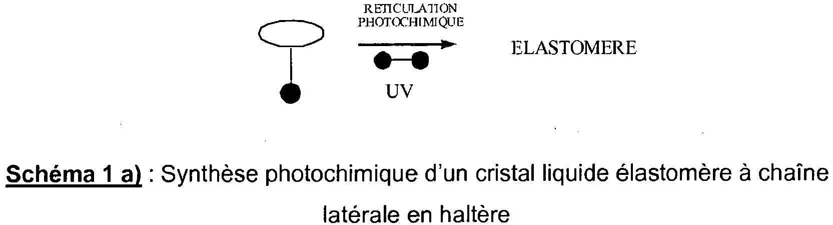

Selon ce premier mode de réalisation, le mésogène est mélangé à un agent de réticulation et à un photoinitiateur de sorte à former un cristal liquide élastomère.

L'agent de réticulation est destiné à permettre la réticulation entre les fonctions réticulables portées par les mésogènes. Le photoinitiateur est destiné à initier la réticulation sous l'effet de longueurs d'onde.

A titre préféré l'agent de réticulation est l'hexanediol diacrylate et le photoinitiateur est l'Irgacure 819® fabriqué par Ciba-Geigy.

Selon un deuxième mode de réalisation, le cristal liquide élastomère est formé par au moins une chaîne polymère comprenant au moins un mésogène. La chaîne polymère et/ou le mésogène comprennent une fonction réticulable chimiquement ou photochimiquement de sorte à former un élastomère tel que représenté sur les **schémas 1 b et 1 bis**.

A titre préféré, la chaîne polymère est une chaîne polysiloxane.

Le mésogène est soit intégré dans la chaîne principale du polymère, soit greffé en tant que chaîne latérale en haltère sur la chaîne principale du polymère.

Lorsque le mésogène est situé dans la chaîne principale du polymère, on parle de cristal liquide élastomère à chaîne principale. Lorsque le mésogène est situé en chaîne latérale de la chaîne principale du polymère, on parle de cristal liquide élastomère à chaîne latérale ou en haltère.

On entend par à chaîne latérale lorsque le mésogène est greffé à la chaîne principale par une de ces extrémités (end-on) et en haltère quand le mésogène est greffé à la chaîne principale par un côté (side-on).

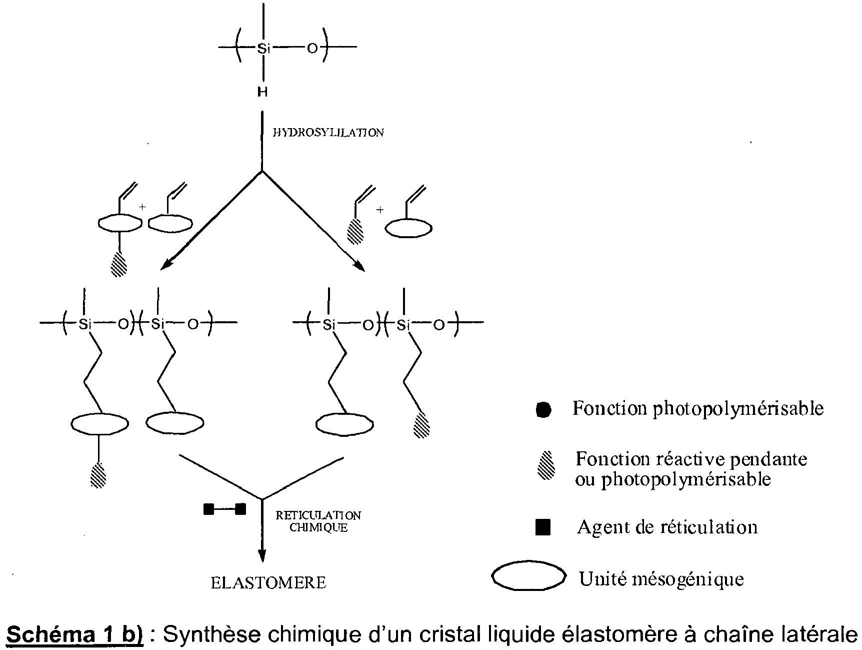

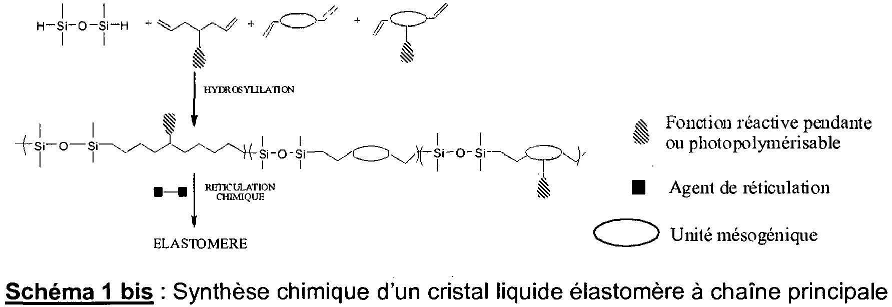

Préférentiellement, le mésogène est relié directement au motif biphényle ou phényle.

La nature du mésogène, sa fixation à différents taux, son emplacement et l'emplacement et la nature de la fonction réticulable permettent d'obtenir des températures d'actuation différentes et en particulier des températures basses. Or, un des enjeux des cristaux liquides élastomères selon l'invention est de présenter des températures d'actuation facilement mises en oeuvre.

Selon l'invention, les élastomères cristaux liquides et les matériaux composites adaptatifs qui en sont directement issus sont activables et contrôlables de façon réversible à des températures basses, en particulier à des températures voisines de la température ambiante.

Le précurseur mésogène du cristal liquide élastomère selon l'invention présente une phase cristal liquide nématique, cholestérique ou smectique. Avantageusement celle-ci est nématique ou cholestérique.

Les cristaux liquides selon l'invention sont utilisés notamment pour former des matériaux composites.

On entend par matériau composite, un matériau qui possède des propriétés que les éléments le constituant pris indépendamment ne possèdent pas. Classiquement, un matériau composite est formé par une matrice et un renfort, ou des inclusions servant de renfort.

Le matériau composite selon l'invention est conçu de manière à ce que le cristal liquide élastomère apporte une propriété associée à sa fonction de capteur ou d'actuateur. Ainsi par exemple, placé de manière appropriée, il contribue à soulager un effort subi par la matrice ou à conférer à celle-ci un mouvement prédéterminé.

La présente invention concerne deux classes de matériaux selon que le cristal liquide élastomère mis en forme constitue le matériau de la matrice ou des inclusions.

Selon l'invention le matériau composite est réalisé par tout assemblage, par collage ou tout autre procédé.

Selon l'invention, la matrice et le renfort sont formés par des composants différents, ne possédant notamment pas les mêmes propriétés. Selon une possibilité, la matrice ou le renfort est un composant statique, c'est-à-dire n'étant pas adaptatif. A titre d'exemple on peut citer des composants statiques tels que verre, papier, textile, plastique ou moins usités tel qu'un polymère de spécialité.

Selon un mode de réalisation, le matériau composite selon l'invention comprend un actuateur. On entend par actuateur, au moins un composant configuré pour activer le matériau composite et notamment le cristal liquide élastomère. L'actuateur permet le passage d'un cristal liquide élastomère selon l'invention d'un premier état physique, avantageusement anisotrope (mésogènes à l'état ordonné), à un deuxième état physique, avantageusement isotrope (mésogènes à l'état désordonné). A titre d'exemple, le changement d'état physique a une cause d'origine thermique ou optique ou électrique et des effets mécaniques, électriques ou optiques.

De nombreuses formes de composites peuvent être réalisées selon l'invention. A titre d'exemples non limitatifs, un bilame, un cylindre creux, un fil, une fibre...

Les fils de cristaux liquides élastomères issus d'une filière sont uniformes ou mixtes ou composites, creux ou non. Ils sont coupés puis assemblés sous forme de fibres. Les fibres deviennent composites en combinant les fils avec d'autres fils élastomères.

Les fils subissent des transformations destinées à leur donner de nouvelles propriétés par enduction, imprégnation ou adhérisation par des résines ou des procédés textiles comme le guipage ou le retordage ou subir des traitements tels que l'ennoblissement, l'enduction ou le complexage.

Les fils sont par exemple tissés. Un des procédés préférés de l'invention est le tricotage. Un autre procédé préféré est l'utilisation de non tissés.

### Exemple 1 : Matériau composite bilame

Un film adaptatif en cristal liquide élastomère selon l'invention présentant une contraction lors d'un chauffage est collé sur un film «standard» ne présentant pas cette propriété. On entend par film standard qu'il ne possède pas de propriété du type des cristaux liquides élastomères ou du moins du cristal liquide élastomère formant le film adaptatif. Le film standard est revêtu d'une couche conductrice - ou constitue celle-ci - telle qu'une couche métallique ou d'ITO permettant son chauffage. Ici, la couche métallique permet, par exemple par effet Joule, de faire passer le film adaptatif d'un premier état physique ordonné dans une direction et donc dilaté dans cette direction à un deuxième état physique non dilaté et isotrope.

Lors d'une montée en température les coefficients de dilatation thermique des deux matériaux étant différents, un effet de pliure du bilame est observé. Selon la valeur de la force du film actuateur choisi lors de sa contraction et les propriétés mécaniques du film standard qui lui est associé, une pliure réversible ou non est observée. Avec un même matériau standard du bilame, une pliure réversible est observée lorsque l'épaisseur de ce matériau est très fine et une pliure irréversible est observée dans le cas contraire.

### Exemple 2 : Matériau composite cylindre creux

L'obtention d'un cylindre creux, de préférence de section circulaire, capable de se contracter ou de se dilater fortement sur tout ou partie avec un stimulus extérieur est un enjeu important. Celui-ci est obtenu en fabriquant un fil creux ou en courbant un ruban selon son petit axe, jusqu'à ce que les deux extrémités longitudinales se rejoignent et en collant ou soudant celles-ci.

Activé, le cylindre creux se contracte ou se dilate fortement selon que l'axe de contraction du film a été choisi parallèle ou perpendiculaire à l'axe du cylindre creux.

### Exemple 3 : Matériau composite fibre formée d'un fil et d'une gaine.

Un noeud est formé avec une fibre composite selon l'invention. Le coeur de la fibre est constitué par un fil adaptatif tel que celui fabriqué dans les exemples selon l'invention, et la gaine, très fine est réalisée avec un élastomère tel qu'un élastomère silicone de type Sylgard 184® (Dow Corning).

La fibre composite, initialement dans son état « non contracté » (anisotrope), est activée pour se contracter (état isotrope). Un resserrement du noeud est observé, comme représenté en figure 12. Cette transformation est réversible et peut être reproduite indéfiniment.

De manière additionnelle, dans son état initial non contracté, la fibre apparaît blanche (biréfringente) et sombre dans l'état contracté (isotrope).

L'activation est thermique ou électrique si l'on a pris soin au préalable de rendre la fibre conductrice par inclusion de nanocharges conductrices en quantité suffisante ou par tout traitement de surface telle qu'une métallisation sous vide.

La synthèse d'un cristal liquide élastomère selon l'invention comprend au moins une étape de réticulation chimique ou photochimique d'au moins un mésogène selon la formule I ci-dessus et/ou au moins une étape d'hydrosylilation d'au moins un mésogène sur au moins une chaîne polymère.

Selon le mode de réalisation représenté sur le **schéma 1a**, la synthèse du cristal liquide élastomère selon l'invention est constituée d'une étape de réticulation d'au moins deux mésogènes selon la formule I comprenant au moins une fonction réticulable chimiquement ou photochimiquement.

Selon le mode de réalisation où le cristal liquide élastomère comprend une partie mésogène greffée sur une chaîne polymère tel que représenté sur les **schémas 1 b** et **1 bis**, la synthèse du cristal liquide élastomère selon l'invention comprend une étape d'hydrosylilation d'au moins un mésogène selon la formule I sur une chaîne polymère, puis une étape de réticulation de sorte à former un élastomère.

La réticulation peut être réalisée photochimiquement ou chimiquement.

Pour une réticulation photochimique, le mésogène et/ou la chaîne polymère comprend au moins une fonction photoréticulable qui sous radiation à certaines longueurs d'onde, par exemple Ultraviolet (UV), entraîne une réticulation et la formation du cristal liquide élastomère.

Pour une réticulation chimique, le mésogène et/ou la chaîne polymère comprend une fonction réactive qui dans un milieu réactif adapté entraîne une réticulation et la formation du cristal liquide élastomère.

A titre d'exemple, une fonction photoréticulable satisfaisante est l'allyl méthacrylate et une fonction réactive est une fonction du type hydroxyle.

Selon une possibilité avantageuse, un cristal liquide élastomère selon l'invention comprend des mésogènes selon la formule I différents.

En ce qui concerne les cristaux liquides élastomères à chaîne principale, le mésogène selon la formule I présente avantageusement comme radical Y deux fonctions éthyléniques destinées à se polymériser avec des comonomères silylés présentant ou non une fonction alcool notamment à leur périphérie (**schéma 1 bis**).

La **table 7** montre quelques monomères utilisés dans la réalisation de cristaux liquides élastomères à chaîne principale.

Les cristaux liquides élastomères selon l'invention présentent diverses fonctionnalités en fonction de leurs substituants notamment. A titre d'exemple, pour obtenir un cristal liquide élastomère présentant des propriétés actuatrices photosensibles, le mésogène comporte une fonction azoïque (NN).

Les formulations réalisées en vue de la préparation des cristaux liquides élastomères selon l'invention peuvent contenir des additifs divers. La nature des additifs dépend de la fonctionnalité prévue pour le cristal liquide élastomère. Les additifs les plus utilisés pour les cristaux liquides élastomères sont notamment des colorants pour apporter une coloration, des molécules ou particules amenant une fluorescence ou une luminescence et des nanoparticules afin d'introduire une autre fonctionnalité telle qu'une conductivité ou une luminescence. Les nanoparticules anisotropes, telles que les nanotubes de carbone mono ou multi-feuillet et les particules de type « nanorod » métalliques (notamment or, argent) ou d'oxydes métalliques anisotropes sont préférentiellement choisies car, compte tenu des rapports d'aspects particulaires importants, elles conduisent à des seuils de percolation bas (en général du pourcent ou un peu supérieur).

De nombreuses combinaisons sont possibles en utilisant les monomères seuls ou en mélange, avec des agents de réticulation différents.

La **table 9** indique quelques uns des agents de réticulation utilisés. Ils peuvent être multivalents et de connectivité 2, 3 ou 4. Ils sont eux-mêmes mésogènes ou non.

Plusieurs exemples de procédés de synthèses de différents cristaux liquides élastomères selon l'invention sont décrits ci-après.

### Exemple 4 :

Cristal liquide élastomère à chaîne latérale dont la chaîne principale est un polysiloxane et dont la réticulation est réalisée photochimiquement :

Le mésogène en haltère décrit à partir de la formule générale (I) dont la structure est donnée ci-après est greffé sur un squelette polysiloxane par réaction d'hydrosylilation en présence de catalyseur Pt(COD)Cl₂ à 60°C, l'allyl méthacrylate est simultanément greffé générant une fonction photo-polymérisable.

Structure du mésogène en haltère de l'exemple 4

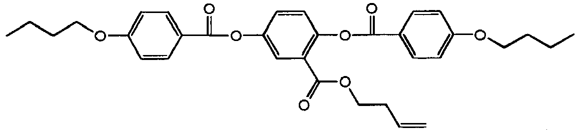

L'élastomère correspondant est obtenu en présence d'hexane diacrylate et de d'Irgacure 819® (Ciba) comme photoamorceur.

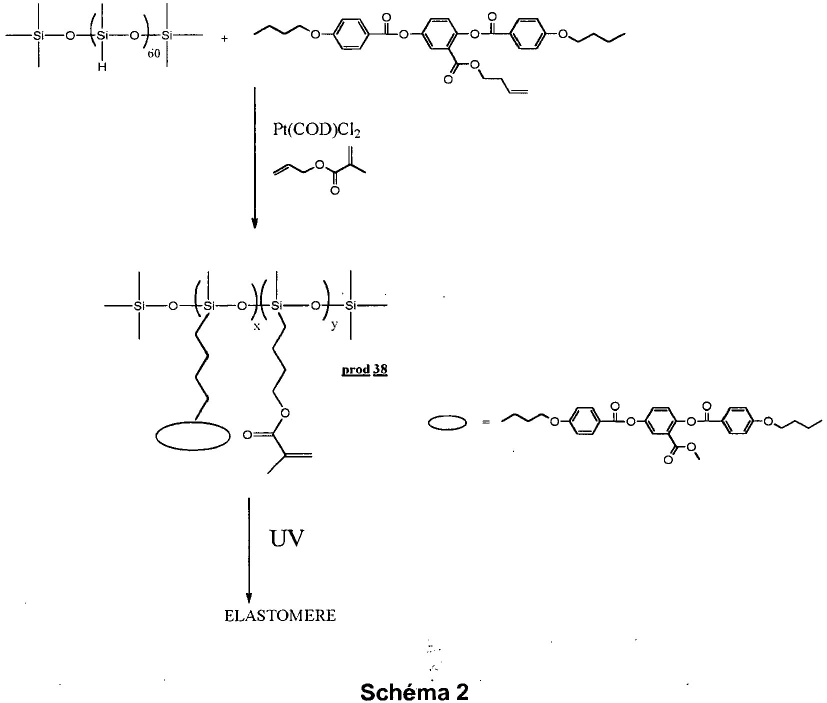

### Exemple 5 :

Cristal liquide élastomère à chaîne latérale dont la chaîne principale est un polysiloxane et les mésogènes sont différents et dont la réticulation est réalisée par réticulation photochimique.

Les mésogènes en haltère décrits à partir de la formule générale (I) et dont les structures sont données (schéma 3) sont greffés sur un squelette polysiloxane par réaction d'hydrosylilation en présence de catalyseur Pt(COD)Cl₂ à 60°C, l'allyl méthacrylate est simultanément greffé générant une fonction photo-polymérisable (voir schéma 3).

L'élastomère correspondant est obtenu en présence d'hexane diacrylate et de d'Irgacure 819® (Ciba) comme photoamorceur.

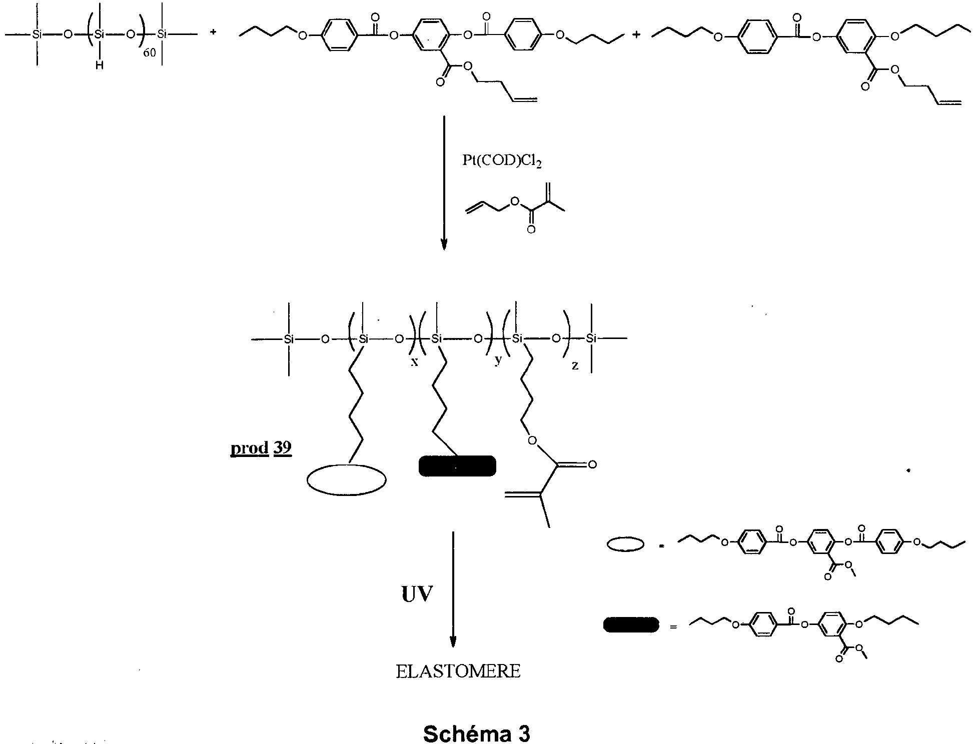

### Exemple 6 :

Un cristal liquide élastomère à chaîne latérale comprenant une chaîne polysiloxane greffée par des mésogènes différents dont au moins un possède une fonction acrylate et dont la réticulation est photochimique.

Les mésogènes en haltère dont les structures sont données (voir schéma 4), sont greffés sur un squelette polysiloxane par réaction d'hydrosylilation en présence de catalyseur Pt(COD)Cl₂ à 60°C. Une fois le greffage effectué, une estérification est réalisée avec le chlorure d'acryloyle en présence de triéthyleamine (TEA), comme le montre le **schéma 4**. Ainsi un polysiloxane possédant une fonction photo-polymérisable portée par le mésogène lui-même (voir schéma 4) est synthétisé.

L'élastomère correspondant est obtenu en présence d'hexane diacrylate et de d'Irgacure 819® comme photoamorceur.

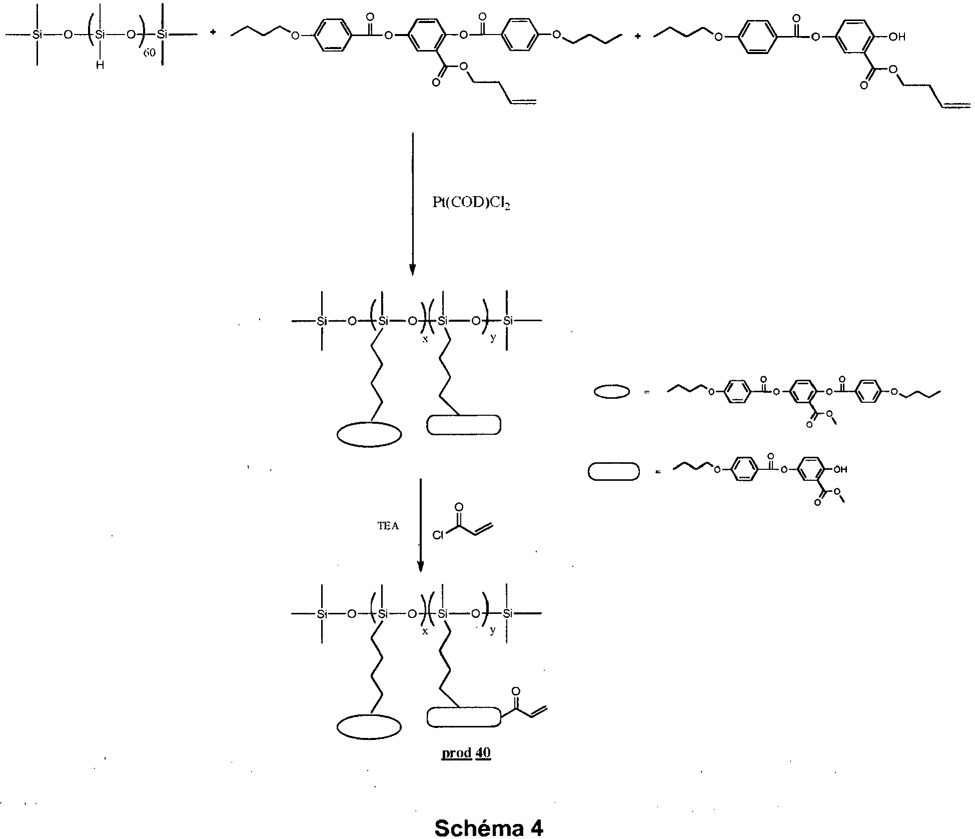

### Exempte 7 :

Synthèse d'un cristal liquide élastomère à chaîne principale, réticulation chimique.

Des comomères de base le 1,6-heptadien-4-ol et le 1,1,3,3-tetramethyldisiloxane ont été choisis. Les élastomères sont ensuite obtenus par réticulation chimique à l'aide de l'hexane diisocyanate en présence de dibutylétaindilauréate (DBTDL).

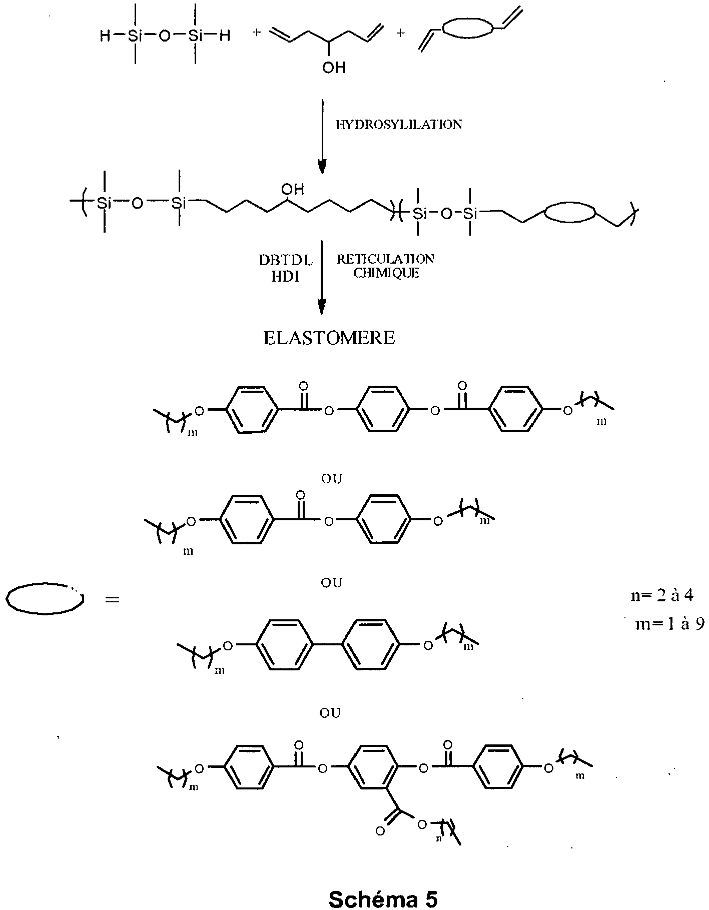

Lors de la synthèse des cristaux liquides élastomères selon l'invention une étape de mise en forme est avantageusement réalisée de sorte à donner une forme de fil, film, conduit, etc., au cristal liquide élastomère.

Lors de la formation du cristal liquide élastomère et pour obtenir une orientation souhaitée, la réticulation est avantageusement réalisée en phase anisotrope.

Selon un mode de réalisation, l'étape de mise en forme d'un cristal liquide élastomère selon l'invention comprend au moins une étape de polymérisation partielle, suivie d'au moins une étape de déformation mécanique pour parfaire l'orientation des monomères puis d'au moins une étape de polymérisation totale pour « figer » l'orientation moléculaire avant emploi du cristal liquide élastomère ainsi mis en forme.

Cette succession d'étapes contribue également à augmenter les propriétés d'actuation du cristal liquide élastomère mis en forme.

D'une manière générale, lors de la préparation d'un film à base de cristal liquide élastomère selon l'invention, les conditions dites d'ancrage aux surfaces sont déterminantes.

Selon un mode de réalisation, le film est formé entre deux substrats préalablement revêtus d'une couche d'ancrage contrôlée. Les ancrages planaires, homéotropes ou tiltés sont obtenus par les méthodes bien connues de l'homme de l'art. Ainsi par exemple un revêtement de Poly Vinyl Acétate (PVA) ou de polyimide brossé permet d'obtenir facilement des ancrages planaires. De même, l'orientation entre les deux substrats peut être parallèle, perpendiculaire ou faire un angle de valeur choisie.

Selon un mode de réalisation préféré les alignements des substrats sont planaires et leur disposition perpendiculaire conduit à un fort enroulement du film.

Le film est formé par introduction, avant réticulation, des constituants du cristal liquide élastomère entre deux substrats parallèles distants d'une épaisseur d qui déterminera l'épaisseur du film réticulé après séparation des substrats.

On entend par constituant, les différents précurseurs permettant la synthèse d'un cristal liquide élastomère selon l'invention. Les précurseurs possibles sont au moins un mésogène, et/ou une chaîne polymère et/ou un agent de réticulation et/ou un dopant chiral et/ou des additifs.

Selon un autre mode de réalisation, il est possible d'utiliser un seul substrat, préalablement traité, pour obtenir une orientation préférentielle à sa surface. Les précurseurs du cristal liquide élastomère sont alors déposés en couches sur le substrat et se trouvent orientés lorsque l'épaisseur de la couche est comparable à la longueur de corrélation pour l'orientation des mésogènes avant réticulation. Les méthodes de dépôt classique en phase solvant ou pure telle que la pulvérisation ou le raclage peuvent être utilisées.

La demanderesse a tout particulièrement noté qu'une élévation de la température en phase anisotrope légèrement au-dessous de la température isotrope-anisotrope permet de parfaire l'orientation.

Le contrôle de l'orientation spatiale du directeur du cristal liquide, c'est à dire la droite indiquant la direction moyenne des mésogènes, ainsi qu'un ordre moléculaire élevé permettent d'obtenir différents types de cristaux liquides mis en forme présentant des propriétés adaptatives de contraction, de torsion ou d'enroulement brusque ou progressif lors d'une activation.

Pour observer une contraction, un film d'élastomère doit être préparé avec une orientation des molécules dans une direction axiale (nématique).

Selon l'invention, il a pu être remarqué que de façon surprenante, l'obtention de propriétés d'actuation optimales est subordonnée à la fois au choix d'une température adéquate en phase anisotrope et d'un étirement éventuel avant la réticulation totale.

Il est montré que les effets de rotation des films dépendent de trois aspects :
- la chiralité du mésogène et en particulier lorsque celle-ci est obtenue grâce à un monomère chiral ou encore en utilisant le dopage d'un monomère fonctionnel nématique par un dopant chiral c'est à dire une molécule chirale compatible avec le mésogène et induisant une chiralité dans la phase nématique considérée,
- le sens de découpage du film par rapport à celui de l'ancrage du ou des substrats utilisés lors de sa fabrication,
- le contrôle des conditions d'alignement des substrats utilisés lors de la fabrication du film.

Selon une possibilité, les cristaux liquides élastomères sous forme de film, fil... peuvent être gonflés par des solvants tels que des solvants mésogènes, ce qui favorise une activation, en particulier électrique.

Enfin les cristaux liquides élastomères sous forme de film, fil... peuvent inclure des particules nanométriques telles que des particules de carbone, des oxydes métalliques, des argiles ou des métaux qui modifient avantageusement certaines propriétés telles que les propriétés mécaniques (module par exemple), anti-feu ou thermiques, électriques.

Dans les exemples présentés, l'activation est thermique. Elle peut être d'une autre nature en particulier électrique en utilisant ou non un effet Joule.

Selon le procédé de mise en forme, il peut être introduit des gradients dans l'orientation moléculaire du cristal liquide mis en forme.

Selon un mode de réalisation, le cristal liquide élastomère est mis en forme de sorte que seules certaines zones possèdent des propriétés adaptatives. Un procédé préféré consiste à délimiter les zones que l'on souhaite non activables en effectuant la réticulation de celles-ci en phase isotrope (désordonnée), et les zones que l'on souhaite activables en phase anisotrope (ordonnée). Une modification de la température de réticulation permet de réaliser cette opération. Le dessin des zones activables peut être de formes variées. Par ailleurs la fonctionnalité de ces zones est choisie « à façon » pour obtenir l'effet désiré. Par exemple les zones peuvent correspondre à des films décrits ci-dessus ayant l'une des fonctionnalités de capteur ou d'actuateur ou les deux.

Lors de cette mise en forme des cristaux liquides élastomères selon l'invention, la réticulation est soit chimique ou photochimique. A titre préféré la réticulation est photochimique car les précurseurs sont moins visqueux et l'action des couches d'ancrage plus efficace.

L'étape mise en forme d'un cristal liquide selon l'invention permet de fabriquer des films, fils... pouvant présenter des réflexions de la lumière dans les domaines des UV, du visible et de l'infrarouge.

Selon un mode de réalisation, des monomères chiraux ou d'autres molécules ayant des groupements polaires - tel qu'un groupement cyano (CN) - ou permettant un changement de conformation - tel qu'un groupement azo (NN), afin de pouvoir modifier les propriétés du film, fil,... sont ajoutés notamment lors du procédé de fabrication du cristal liquide élastomère selon l'invention.

Si un groupement cyano (CN) est choisi, l'application d'un champ électrique sur une partie du film avant sa réticulation permet de débobiner la structure cholestérique et d'obtenir un nématique dont la direction d'orientation est perpendiculaire au plan du film qui peut être réticulé. La partie du film ainsi traitée ne présente pas de propriétés de réflexion de la lumière.

Ces différents traitements sont effectués seuls ou en les combinant.

Il est possible d'associer plusieurs films, fils... tels que ceux décrits ci-dessus entre eux. Parmi les multiples combinaisons possibles, les composites associant un film, fil,... de cristal liquide élastomère nématique à un film, fil,... cristal liquide élastomère cholestérique permettent d'obtenir des matériaux montrant simultanément un changement de forme et une modification des propriétés optiques.

### Exemple 8 :

Procédé de fabrication d'un cristal liquide élastomère selon l'invention mis en forme sous forme de film actuateur ayant de propriétés de contraction et réalisé par réticulation photochimique

Les films sont préparés avec des cristaux liquides élastomères dont les mésogènes comportent un groupement biphényle seul, ou associé à un cycle aromatique par un groupement ester (**composés Prod3 et Prod1**).

Les films ont été obtenus à l'aide de deux substrats, distants de 30 microns et revêtus de couches d'ancrage planaire constituées par du PVA, brossées avec des directions de brossages antiparallèles. L'agent de réticulation utilisé est le HDDA (1,6 Hexanedioldiacrylate) (**table 9**) et le photoinitiateur est l'Irgacure 819® (Cyba Geigy) ajouté à une concentration de 1 %.

Lors de leur élévation en température, les films présentent une contraction brusque. Il est possible de constater que les températures d'actuation sont respectivement de 35°C pour le film préparé avec le **composé Prod3**, et de 150°C pour le film préparé avec le **composé Prod1. Les** **figures 2** **et** **3** sont relatives aux actuations observées

En fait les températures d'actuation ont pu être réglées dans une large gamme allant de la température ambiante à 200°C en modifiant la formulation du mélange précurseur.

### Exemple 9 :

Plusieurs films ont été obtenus selon le procédé de l'exemple 8. On utilise successivement les composés **Prod11, Prod6, Prod7, Prod9, ProdB, Prod14** mélangés au composé **Prod10** à des concentrations différentes telles qu'indiquées sur la **figure 4** et qui représente les courbes de contraction obtenues pour les différentes formulations. Il est bien visible à partir de cette figure qu'il est possible par formulation de choisir les propriétés (température, amplitude) de l'actuation.

### Exemple 10 :

L'efficacité de l'actuation est fonction de la structure chimique du cristal liquide élastomère.

Ainsi, en utilisant d'une part des mélanges de composés **Prod9** et **Prod10** et d'autre part des mélanges de **Prod6** et **Prod10** pour la préparation de film selon l'exemple 8 les propriétés d'actuation sont différentes.

Les composés **Prod6** et **Prod9** sont isotropes à la température ambiante.

Pour un mélange de 80% de **Prod10** /20% de **Prod9** auquel est rajouté 4% de HDDA, la rétractation est de 20% à 68°C.

Pour un mélange de 75 % de **Prod10** /25% de **Prod6** auquel est rajouté 4% de HDDA le mouvement de contraction-élongation est de 30% autour de 55° C.

Pour un mélange de 70% de **Prod10**/ 30% de **Prod6** la contraction élongation est d'environ 25% autour 50 °C.

De même, les composés **Prod11** et **Prod10** ne diffèrent que par la longueur du bras espaceur, c'est à dire de la partie flexible du mésogène qui relie la partie rigide du mésogène à la chaîne, qui reste court (2 et 4 carbones). Ils ont des températures de transition voisines (98° et 86 °C) et des pourcentages d'actuation voisins (45% et 40%), alors qu'un composé identique mais avec un bras espaceur ayant 10 carbones ne donne pas d'actuation.

### Exemple 11 :

Les modifications de la structure chimique du cristal liquide élastomère influe sur la réversibilité de l'actuation.

Deux films préparés selon l'exemple 8 et avec respectivement les composés **Prod3** et **Prod5.** Les températures de transition de ces composés sont respectivement de 32,20° et 44,40 °C. Le film réalisé avec le **Prod3** conduit à un actuateur se rétractant réversiblement, alors que celui réalisé avec le **Prod5** se rétracte mais ne revient pas à sa forme initiale lors de la descente en température.

### Exemple 12 :

Un film préparé avec le composé **Prod10** et 4% de HDDA, de manière similaire à celle de l'exemple précédent est découpé sous forme de ruban à l'extrémité duquel une charge est fixée. Il est observé que les propriétés d'actuation sont conservées de manière entièrement réversible pour des valeurs du poids de la charge égales - pour cet exemple - à 700 fois le poids du film.

### Exemple 13 :

Le polysiloxane **6-I** ayant une température d'isotropisation de 89,20°C, greffé avec 80 % de M1 et 20% d'alcool allylique est utilisé. 4% de HDI (1,6-Diisocyanatohexane) et 1% de DB (dibutin bis (2-ethyl hexanoate) sont ajoutés. Le mélange est réalisé en solution dans du dichlorométhane (CH₂Cl₂) sous agitation.

Le solvant est évaporé puis le mélange est déposé sur une plaque de verre comportant un film d'alignement en PVA. Un film de 80 microns d'épaisseur est obtenu à l'aide d'une racle.

Puis le film obtenu est pré-réticulé pendant 1 H30 à 55 °C.

Lors de cycles durant lesquels la température est successivement élevée et abaissée entre 20° et 100°C, le film ne se déforme que très faiblement (5%).

Pour améliorer les propriétés du film, la réticulation a ensuite été effectuée en deux temps. Le mélange est déposé en film et légèrement réticulé puis récupéré et étiré pour améliorer l'orientation. La réticulation est ensuite complétée. Des étirements de 50% et 75% du film ont été réalisés.

### - Etirement à 50%

On utilise le même mélange que précédemment en solution dans du dichlorométhane (CH₂Cl₂). Une fois le solvant évaporé, le mélange est déposé sur une lame de verre, sans couche d'orientation en PVA, portée à la température de 55°C. Il est réticulé pendant 3 minutes à 55°C. Après retour à la température ambiante le film est récupéré, étiré de 50% et à nouveau réticulé pendant 1 H30.

Lors de cycles en température, une étude montre que lors de la première montée en température un rétrécissement de 18% est observé, et lors des cycles suivants, un rétrécissement reproductible de 12%.

### - Etirement à 75%

La procédure de préparation du film précédent est reproduite intégralement, excepté que l'étirement est de 75%. Lors de la première montée en température le rétrécissement est de 25% et l'actuation lors des cycles suivants est de 20% (figure 6).

L'étirage à 75% permet d'augmenter l'effet d'actuation de 8% par rapport à un étirage de 50% (**figure 7**).

Le HDI (1,6-Diisocyanatohexane) peut être remplacé par MDI (4,4' diisocyanate de diphenyl méthane) pour la préparation de ce film. Néanmoins, de meilleurs résultats sont observés avec HDI.

Effet du sens de découpage du film en rubans par rapport à celui de l'ancrage du ou des substrats utilisés lors de sa fabrication.

Considérons un film donnant une torsion appréciable, par exemple préparé avec une concentration de dopant faible (autour de 1 %) avec l'un des dopant chiraux de la **table 8**, et désignons par x la direction de l'alignement des substrats lorsque ceux-ci sont placés parallèlement, le découpage du film pour réaliser un ruban peut être effectué avec pour axe du ruban la direction x ou la direction y ou tout autre direction. Les rubans découpés dans les directions x et y présentent respectivement des torsions dans des sens opposés. Ce phénomène est lié à la valeur du pas de l'organisation hélicoïdale des molécules, qui ici est grande par rapport aux longueurs d'ondes de la lumière visible.

Par ailleurs pour des films préparés dans des conditions identiques mais avec des dopants caractérisés par des sens de rotation inverses (R ou S), il a été observé que le sens de rotation des films (droit ou gauche) est directement lié au sens de rotation des dopants chiraux. Enfin l'amplitude de la torsion est également liée au pouvoir de torsion (HTP : Helical Twist Power) du dopant chiral. Plus celui-ci est fort plus la torsion est importante.

### Exemple 14 :

Film actuateur en rotation comprenant un gradient d'orientation.

Le film est préparé à l'aide d'une racle, laquelle induit un cisaillement du précurseur dans une direction. L'orientation moléculaire est maintenue ici uniquement dans les régions proches du substrat. Le film montre un enroulement autour d'un axe qui correspond à la direction perpendiculaire à celle du cisaillement qu'il a subit lors de sa préparation. L'orientation du directeur est dissymétrique à cause de l'utilisation d'un seul substrat, lequel est traité pour avoir une orientation planaire.

### Exemple 15 :

Formation d'un cristal liquide sous forme d'un film dont une zone prédéterminée présente des propriétés de capteur.

Le film cristal liquide élastomère est obtenu à partir d'un mélange constitué de :
- 40 % du composé **Prod30**, lequel présente l'intérêt d'être simultanément chiral et fortement polaire, grâce au groupement cyano (CN) en position para.
- 60 % du composé **Prod10**.
- HDDA en proportion de 4% du total.
- Un photoinitiateur (1%) du total.

La température d'isotropisation du mélange est de 53°C.

Le mélange est infiltré à 120°C entre deux lames de verre revêtues d'un film d'alignement de PVA et distantes de 20 microns. La température du film est amenée à la température ambiante pour que celui-ci soit en phase anisotrope. La polymérisation est alors effectuée. Le spectre du film avant réticulation montre une réflexion de la lumière aux alentours de 550nm. Après réticulation, le spectre est légèrement décalé vers les longueurs d'ondes les plus courtes.

La préparation est maintenant dupliquée, mais en choisissant pour substrat, d'une part une lame de verre recouverte d'ITO sur toute sa surface, avant le dépôt d'une couche planaire, et d'autre part une lame de verre recouverte d'ITO (Indium Tin Oxide) sur toute la moitié de sa surface avant le dépôt d'une couche planaire.

Cette configuration permet d'appliquer un champ électrique - ici une tension de 180Volt - sur la moitié du film avant réticulation. Dû à son orientation planaire, la partie du film n'étant pas sous champ électrique présente une réflexion de la lumière, alors que la seconde partie n'en présente pas puisque les molécules ont été orientées par le champ électrique perpendiculairement aux substrats. Il est donc possible de délimiter dans le film une zone active selon un design préalablement choisi.

### Exemple 16 :

Cet exemple est destiné à montrer une formulation utilisant un additif tel qu'un colorant dont l'objet est une modification optique du film se rajoutant aux propriétés optiques du cristal liquide élastomère cholestérique.

Un film est préparé à partir du mélange suivant :
- 30 % d'énantiomère de **Prod18**.
- 70% de **Prod10**.
- 4% du total de HDDA.
- 0,5% de dye Bleu (Mitsui).
- 1% d'Irgacure 818®.

Placé entre deux substrats de verre distants de 6 microns, préalablement traités par des couches d'alignement constituées de PVA traité.

Ce mélange est étudié au spectromètre avant et après réticulation (9,8 mw/cm²). Le pic d'absorption situé avant réticulation autour de 620 nm, est alors légèrement décalé vers les longueurs d'ondes courtes et légèrement élargi après réticulation.

### Exemple 17 :

Cet exemple est destiné à montrer un des effets opto-mécaniques obtenus avec un cristal liquide élastomère sous forme de film et présentant des propriétés de capteur : modification optique d'un film sous contrainte de traction.

Le film est préparé à partir d'un mélange constitué de :
- 20% de CB15® composé chiral de chez Mercks.
- 80% de **Prod10**.
- 4% de HDDA.
- 1% de photoinitiateur.

Le mélange est préparé à 75°C et infiltré entre deux plaques de verre, distantes de 30 microns.

La cellule de verre est ramenée à 40°C et une irradiation UV à 365 nm (6.2 mW/cm2) est effectuée pendant 30 minutes.

Comme précédemment, le pic de-réflexion avant réticulation est élargi et décalé vers les longueurs d'ondes courtes lors de la réticulation.

Lors d'une traction, une modification de la couleur du film, avec un net décalage vers les longueurs d'ondes les plus faibles, est observée.

### Exemple 18 :

Cet exemple est destiné à montrer un des effets opto-mécaniques obtenus avec un cristal liquide élastomère selon l'invention sous forme de film et présentant des propriétés de capteur : modification optique d'un film sous contrainte de traction.

Le film est préparé à partir d'un mélange constitué de :
- 4% d'un dopant chiral (**8-E**)
- 96% de **Prod3**.
- 4% de HDDA.
- 1% de photoinitiateur Irgacure 819.

Le mélange est préparé à 120°C° et infiltré entre deux plaques de verre, distantes de 30 microns.

La cellule de verre est ramenée à 22°C et une irradiation UV à 365 nm (6.2 mW/cm²) est effectuée pendant 5 minutes.

Comme précédemment, le pic de réflexion avant réticulation est élargi et décalé vers les longueurs d'ondes courtes lors de la réticulation.

Lors d'une traction, une modification de la couleur du film, avec un net décalage vers les longueurs d'ondes les plus faibles, est observée. Une élongation de 120 % conduit à une modification de la réflexion en incidence normale du film passant du rouge au bleu (**figure 8**).

Selon une variante, le cristal liquide élastomère selon l'invention est mis en forme pour obtenir un fil.

Les phénomènes physiques intervenant lors du filage sont notamment la température, la vitesse de déformation, les propriétés rhéologiques, la cristallisation et l'orientation moléculaire du cristal liquide élastomère.

Selon l'invention, les paramètres suivants ont été étudiés afin d'optimiser la formation des fils : la vitesse de tirage, la température d'extrusion et les conditions de refroidissement.

Avantageusement, la température d'extrusion du milieu à filer est réglée grâce à une enceinte stabilisée en température entre la température ambiante et 250°C.

Selon une possibilité, les conditions d'écoulement sont réglées d'une part, par un moteur et un motoréducteur de poussée du fluide situé dans l'enceinte stabilisée et d'autre part, par un moteur et un motoréducteur situé en sortie de filière.

De plus, le dispositif de filage comporte en outre différentes poulies permettant de réaliser un étirement plus ou moins important du fil à une température réglable entre l'ambiante et 100°C en sortie de filière.

Préférentiellement, l'opération de filage est effectuée en phase anisotrope. La température de filage est choisie en fonction de propriétés rhéologiques du cristal liquide élastomère à mettre en forme.

Lorsqu'il y a lieu d'opérer à un refroidissement du fil, celui-ci est préférentiellement réalisé à température ambiante et peut être assisté par un courant d'air frais.

Préférentiellement, la réticulation est effectuée en sortie de filière.

Dans ce but un dispositif de filage a été conçu permettant notamment :
- de réaliser l'opération de filage sous atmosphère inerte. A cette fin, la sortie de la filière comporte un compartiment dans lequel circule un très léger courant d'azote,
- d'irradier le fil sous UV pour effectuer la photo-polymérisation. A cette fin, le compartiment comporte une fenêtre transparente aux UV,
- une pré-réticulation des monomères est réalisée afin d'ajuster la viscosité du milieu à filer. Celle-ci est suivie d'une réticulation totale en sortie de filière.

D'une manière générale les fibres présentent deux types de rétrécissement :
- un pourcentage de rétrécissement irréversible observé lors du premier cycle en température,
- un pourcentage de rétrécissement réversible observé sur tous les cycles suivants.

L'actuation des fibres peut être réalisée par adjonction de nanoparticules conductrices anisotropes comme des nanotubes de carbone mono ou multi-feuillets, des nanoparticules métalliques ou d'oxydes métalliques. La conduction dépend notamment de la qualité de la dispersion. Pour les nanotubes de carbones bien dispersés dans un cristal liquide élastomère n'ayant pas subi d'écoulements, les seuils de percolation traduisant le passage d'un « état isolant » à un « état conducteur » se situent généralement entre 1 et quelques pourcent. Il en est de même pour les autres nanoparticules conductrices anisotropes (nanorods) telles que les nanoparticules métalliques. En outre l'introduction de nanotubes de carbone dans un cristal liquide élastomère modifie fortement sa viscosité.

### Exemple 19 :

Une fibre est fabriquée avec (**Table 6 - composé 6-F**) un polysiloxane greffé (**M₁**) et (**M₂**) et l'allyl méthacrylate (**M₃**) ayant les proportions relatives 70%,10%, 20%. L'espaceur choisi est le HHDA qui est introduit à 4%.

La **figure 9** compare la rétractation de cette fibre avec une fibre préparée sans groupement chimique **M₂**.

Il est observé que la température d'actuation est nettement diminuée lorsque le groupement chimique **M₂** existe : elle passe de 80 à 60°C.

De plus, un aspect avantageux est observé : le pourcentage d'actuation a été augmenté.

Si maintenant les proportions relatives des groupements chimiques **M₁,M₂,M₃** sont respectivement 60%, 20%, 20%, l'actuation se produit à basse température (<60°C) mais sans post-étirement la fibre présente un mouvement d'actuation faible (9%).

### Exemple 20 :

L'exemple suivant présente les modifications des propriétés d'actuation d'une fibre contenant un taux croissant de nanotubes de carbone, ainsi que l'effet de l'étirage sur ces fibres contenant des nanotubes de carbone.

Le composé 6-A est un polysiloxane greffé avec 80% de groupement chimique **M₁** et 15% d'allyl méthacrylate. Pour la préparation des fibres, il est ajouté 4% de HDDA, 3% du photoinitiateur Irgacure 819, et un pourcentage massique de nanotubes de carbone monofeuillets (SWCNT : Singel Wall Carbone NanoTubes) compris selon les fibres fabriquées entre 2,5 et 7,5% du polysiloxane. La température de filage est de 25°C et la puissance d'irradiation UV du fil en sortie de filière est de 8,2 mW/cm² pour des durées choisies volontairement longues (90 à 120 minutes) pour obtenir une réticulation complète du film. Le taux d'étirage est ajustable par la tension de sortie du moteur d'étirement.

**La** **figure 10** montre que l'augmentation du pourcentage de SWCNT diminue le pourcentage d'actuation réversible.

### Exempte 21 :

L'exemple suivant concerne une fibre préparée par réticulation chimique à partir d'un polysiloxane greffé avec 80 % de groupement chimique **M**₁ et 20 % d'alcool allylique. Le mélange comprend en outre un agent de réticulation (MDI) et un catalyseur DB (dibutyltin bis(2-ethylhexanoate). Le mélange a une température d'isotropisation de 89,2°C.

Le mélange est préparé en solution dans du dichlorométhane (CH₂Cl₂). Après évaporation du solvant, le mélange est réticulé avant filage pendant deux minutes. La fibre est réalisée à 35°C, puis récupérée et étirée de 75%, pour être ensuite réticulée pendant 2H à l'étuve.

On remarque un faible taux d'actuation.

L'expérience est reprise, mais en filant à 55°C au lieu de 35°C dans le cas précédent. La fibre est étirée de 50% puis réticulée pendant 2H à 55°C. La fibre se rétracte réversiblement de 15% entre 60° et 100°C.

Bien que le taux d'étirement soit plus faible que dans le cas précédent, l'actuation est plus forte car le filage n'a pas été effectué à la même température. C'est le couple température de filage/étirement et non pas l'étirement seul, qui est déterminant pour l'amplitude de l'actuation (**figure 11**).

### Exemple 22 :

Cet exemple est destiné à montrer la réalisation d'une fibre de cristal liquide élastomère présentant des propriétés de capteur montrant une modification réversible de sa conductivité à une température prédéterminée.

Une fibre est réalisée en utilisant un mélange comprenant le polymère **6-C** auquel est ajouté 4% de HDDA et 2% d'Irgacure 819®. Le diamètre de la fibre est de 100 microns. La fibre est plongée pendant 50 secondes dans une solution de toluène contenant 1% de nanotubes de carbone multiparois (Arkema). La fibre est séchée. Une tension est appliquée à ses extrémités. La fibre se comporte comme une résistance linéaire avant sa rétractation à 100V. Sa résistivité initiale est de 15 Ohms/m. Lors de sa rétractation sa résistance diminue fortement. La résistivité de la fibre à l'état final est de 3,28 Ohms/m. Cette modification est associée à la modification du seuil de percolation au passage de la transition anisotrope/isotrope pour le cristal liquide élastomère nématique.

En utilisant le même principe : modification du seuil de percolation il est possible de réaliser une fibre montrant une forte modification de conductivité sous contrainte mécanique laquelle peut être utilisée comme capteur.

### Exemple 23 :

Cet exemple est destiné à montrer la modification réversible de couleur d'une fibre composite sous l'effet d'une traction de la fibre.

Une fibre d'élastane noire de diamètre 500 microns est enduite d'un mélange constitué par le composé **Prod3** auquel à été ajouté 7 % du composé **8-E** ainsi que 4% de HDDA et 1% d'Irgacure 819® (Ciba).

La fibre est exposée aux UV à une longueur d'onde de 365 nm ayant une puissance de 4mW/cm² pendant 5 minutes afin de réticuler le mélange nématique chiral servant d'enduction.

Initialement la couleur de la fibre est voisine du rouge (650 nm). Lors d'une traction la fibre modifie progressivement et quasi linéairement sa couleur pour devenir bleu violet (400 nm) pour une élongation de 100%.

Si la concentration de composé **8-E** est de 5%, la longueur d'ondes de réflexion de la lumière par la fibre se situe à 1200 nm (Infra Rouge). Si cette concentration est de 10% cette longueur d'ondes est dans l'Ultra Violet (350 nm).

La traction de plus en plus importante d'une fibre enduite avec un mélange à 5% de **composé 8-E** conduit à la modification de la couleur initiale de la fibre (noire) qui passe successivement par les couleurs du spectre visible en allant du rouge au bleu pour revenir à la couleur initiale de la fibre.

Sur le même principe, en modifiant la concentration du composé **8-E** et l'amplitude de la traction, il est possible de balayer une gamme de longueurs d'ondes prédéfinie du spectre UV, visible ou IR.

L'amplitude de la réflexion de la lumière peut être de 100% à condition d'utiliser successivement deux enductions obtenues avec respectivement le composé **8-E** (chiralité gauche) et son homologue de chiralité droite.

L'enduction peut être elle-même protégée par une enveloppe permettant un lavage de la fibre sans dégradation. Une enveloppe silicone ou de polymère fluoré convient bien.

Les mêmes types de conclusions s'appliquent évidemment si on utilise pour le composite une enduction sur un film et non plus sur une fibre.

Par ailleurs, s'agissant des films ou des fibres, l'élastane peut être remplacé par un autre élastomère.

### Exemple 24 :

Cet exemple est destiné à montrer la réalisation d'une fibre composite et son actuation pour serrer ou desserrer de manière contrôlée et réversible un noeud formé avec la fibre composite (**figure 12**).

' Une fibre (1) est réalisée en utilisant un mélange comprenant 70% de composé **6-C** auquel est ajouté 30% du composé **prod10** et 4% de HDDA et 2% d'Irgacure 819®. Le diamètre de la fibre est de 100 microns. La fibre est plongée pendant 1 heure dans une solution d'isopropanol-toluène (50/50 en poids) contenant 1% de nanotubes de carbone multiparois (Arkema). La fibre est séchée durant 2 heures à l'air. Un fil électrique (2) est collé à chacune des extrémités à l'aide d'une résine époxyde chargée argent E215 (Epotecny). La fibre est plongée dans une solution de Sylgard 184 (Dow Corning). Après séchage on forme avec celle-ci un noeud qui n'est pas serré. Elle est placée dans un circuit (3) comprenant un autotransformateur ainsi qu'une résistance électrique permettant de limiter le courant dans la fibre. Une augmentation de la tension à l'aide de l'autotransformateur permet de resserrer le noeud précédemment formé. Une diminution de cette tension permet de retrouver l'état initial de serrage du noeud. L'opération peut être renouvelée indéfiniment.

### Exemple 25 :

Cet exemple est destiné à montrer la réalisation d'un article textile formé à l'aide d'un composite à fibres adaptatives.

Des fibres sont réalisées en utilisant un mélange comprenant 70%de composé **6-C** auquel est ajouté 30% du composé **prod10** et 4% de HDDA et 2% d'Irgacure 819®. Le diamètre de la fibre est de 100 microns. Elles sont fractionnées en brins et les brins entremêlés sont alignés avec une direction préférentielle. Ils sont trempés dans une solution contenant un polymère fluoré (Solaflon A fabriqué par Polymade) à 50% dans l'isopropanol. Après séchage le Solaflon forme une fine gaine autour des fibres et sous l'effet d'une augmentation de température l'ensemble se rétracte de 14 % dans la direction préférentielle des fibres autour de 50°C (**figure 13**).

D'autres articles textile ou cordages ont été réalisés sur le même principe. Ainsi par exemple la combinaison de films tels que ceux réalisés dans les exemples 8, 9 et 11 à 15 avec un tissu élastomère conducteur permet de réaliser un composite textile avantageusement utilisé dans les bandages et les applications médicales en particulier destinés aux massages. Si les films ou les fibres adaptatifs utilisés sont rendus conducteurs en utilisant les procédés tels que décrits dans l'exemple 20 ou 22, le composite textile contient un tissu élastomère non adaptatif et non conducteur.

### Exemple 26

Cet exemple est destiné à montrer la réalisation d'un film plan composite montrant une déformation contrôlée.

Un film est préparé comme dans l'**exemple 8** avec le composé **prod10.** Le film a une température d'actuation au voisinage de 120°C. Le film est découpé sous forme de rectangles allongés (5) qui sont inclus à plat dans une résine photopolymérisable NOA 65 de chez Norland formant elle-même un film (4) de manière à ce que les morceaux (4) du film actuateur soient complètement enrobés (**figure 14**). La résine est polymérisée et un film composite plat est obtenu. Lors d'une montée en température le film composite présente un flambage vers 120°C car les morceaux de film actuateur tendent à se contracter. Lors d'un retour à la température ambiante le film composite retrouve sa planéité. L'opération est réversible et peut être effectuée un grand nombre de fois. L'activation thermique peut être réalisée électriquement en chargeant la résine ou en déposant sur la surface du film composite un revêtement conducteur tel qu'un revêtement métallique.

Le mésogène du cristal liquide élastomère selon l'invention est avantageusement synthétisé par un procédé de synthèse décrit ci-après.

### Exemple 27 :

Dans une première étape une structure phényle diol (l'acide 2,5-hydroxybenzoïque) ou biphényle diol (l'acide 4,4'-dihydroxybiphényl-2-carboxylique) subit une protection à l'aide du bromure de benzyle en présence de NaHCO₃ dans le DMF (Diméthylformamide) pour donner le composé **1** (**schéma 6**) (tel que décrit par Andrews, E.R.; Fleming, R.W.; Grisar, J.M.; Kihm, J.C.; Wenstrup, D.L.; Mayer, G.D.; J. Med. Chem., 1974, 17, 882-886.).

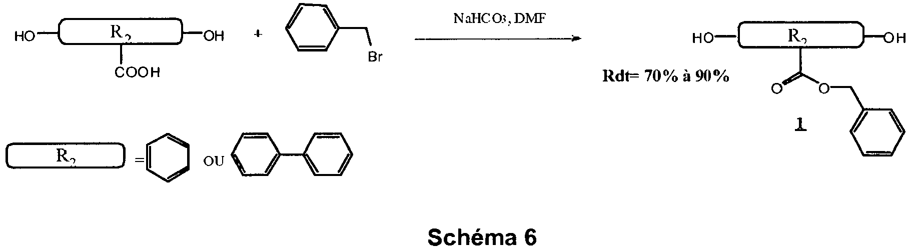

Par la suite cet intermédiaire **1** peut subir des estérifications pouvant amener à des composés symétriques (**2a**) ou dissymétriques (**2b**) en présence de DCC, DMAP et APTS (DCC = N, N dicyclohexylcarbodiimide: DMAP = Dimethylaminopyridine, ATPS = Acide paratolènesulfoniquemonohydrate) avec des rendements de 40% à 80 % suivant les substituants.

Le synthon **1** peut aussi subir une alkylation de Williamson suivi d'une estérification amenant à des composés dissymétriques (**2c**) avec des rendements de 25 à 50 % suivant les substituants. Le **schéma 7** résume ces synthèses.

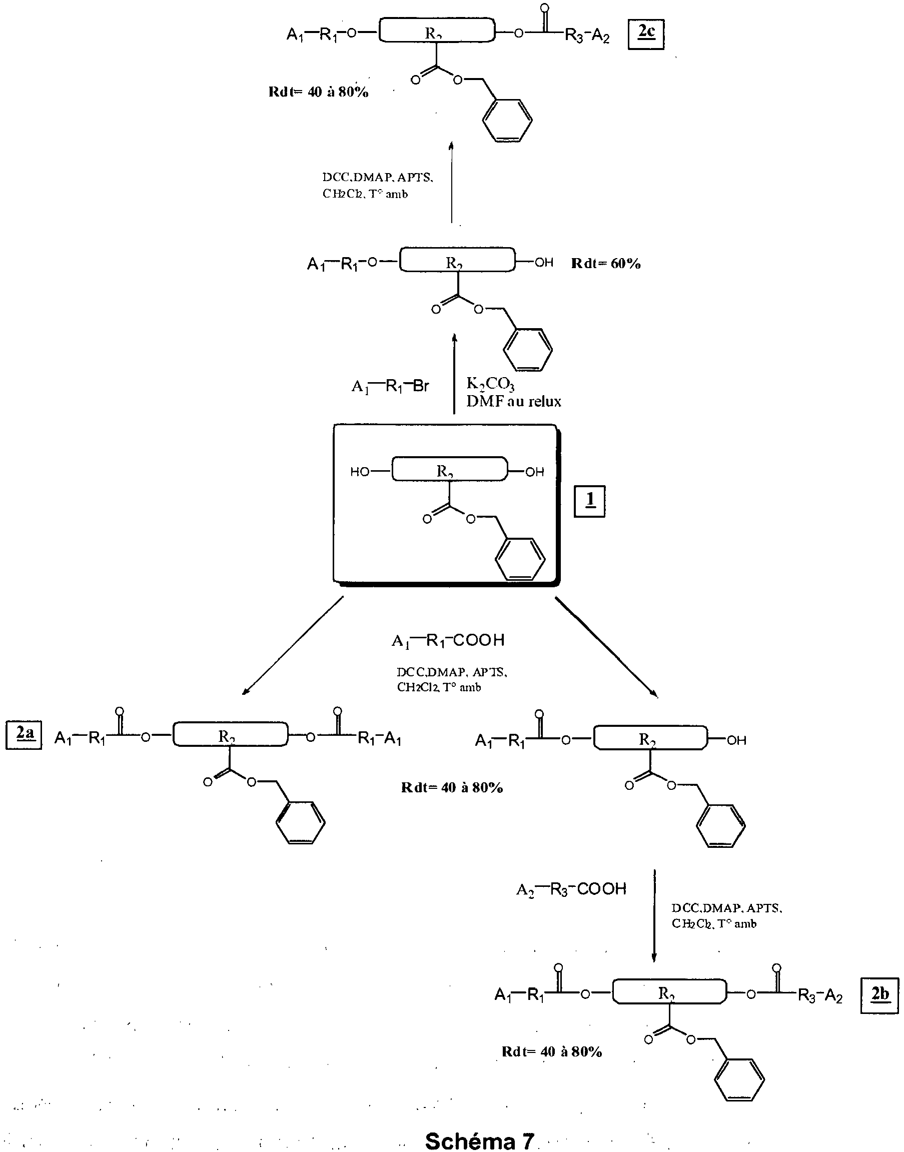

Les composés 2a, 2b et 2c après déprotection sous atmosphère de dihydrogène en présence de palladium sur charbon donne l'acide **3** respectif. Pour finir, le composé **3** est estérifié ainsi le composé **4** est obtenu suivant le **schéma 8**.

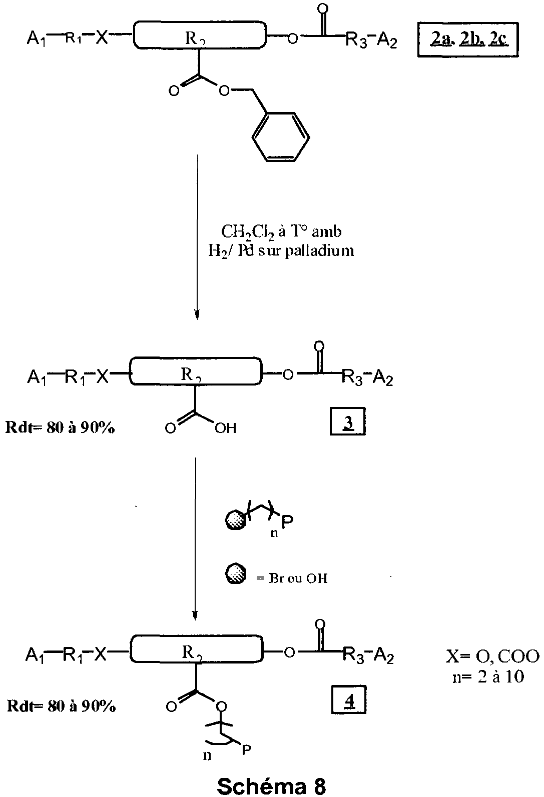

A partir de quelques modifications de synthèse résumées dans le **schéma 9**, des mésogènes de type azoïque ont été synthétisés. En effet en premier lieu une amine aromatique subit une réaction de Sand-Meyer conduisant au produit **5** puis ce dernier est engagé dans une substitution nucléophile pour donner le produit dihydroxylé **6**. Ce dernier est estérifié en position para par un acide benzoïque choisi à l'aide de DCC, DMAP et d'APTS. Le produit **7** est ainsi obtenu. Pour finir, le produit **7** est engagé soit dans une réaction de Mitsunobu avec le 4-hydoxybutylacrylate ou dans une réaction d'estérification avec le 2-bromoéthanol à l'aide de K₂CO₃ dans le DMF à reflux.

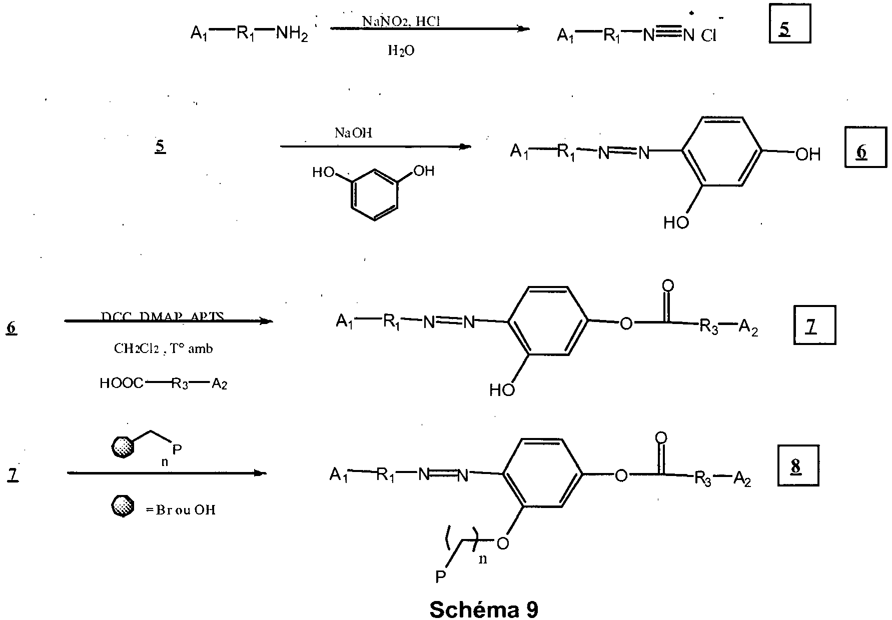

## Revendications

1. Matériau composite adaptatif comprenant un renfort et une matrice dont au moins l'un d'eux comprend au moins un cristal liquide élastomère **caractérisé par le fait que** le matériau comprend une fonction d'actuateur sur tout ou partie de lui-même de sorte à effectuer une contraction ou une torsion ou un enroulement irréversible lors de sa première activation et une contraction ou une torsion ou un enroulement prédéterminé, réversible et contrôlable, qui s'ajoute à la première, lors de toutes les activations suivantes.

2. Matériau composite adaptatif selon la revendication précédente comprenant un actuateur configuré pour faire passer le cristal liquide élastomère d'un premier état physique anisotrope à un deuxième état physique isotrope.

3. Matériau composite adaptatif selon l'une quelconque des revendications 1 ou 2 dans lequel le renfort et la matrice sont des films.

4. Matériau composite adaptatif selon l'une quelconque des revendications 1 ou 2 dans lequel le renfort ou la matrice est un cylindre creux.

5. Matériau composite adaptatif selon l'une quelconque des revendications 1 ou 2 dans lequel la matrice ou le renfort est une fibre et le renfort ou la matrice est une gaine d'élastomère.

6. Matériau composite adaptatif selon l'une quelconque des revendications 1 ou 2 dans lequel la matrice ou le renfort est un fil.

7. Matériau composite adaptatif selon l'une quelconque des revendications 1 ou 2 formant un textile comprenant une activation contrôlable et réversible de ses dimensions.

8. Matériau composite adaptatif selon l'une quelconque des revendications précédentes comprenant une fonction de capteur sur tout ou partie de lui-même de sorte à présenter une réflexion de la lumière ajustable dans les domaines de l'Ultra violet, du visible ou de l'Infra-Rouge et modifiable par une contrainte mécanique.

9. Matériau composite adaptatif selon l'une quelconque des revendications précédentes dans lequel au moins un cristal liquide élastomère comprend au moins un mésogène du type de la formule I : 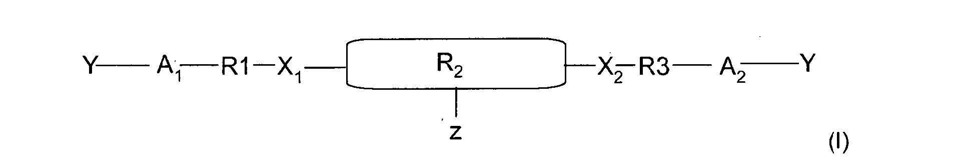
Y représente un propène, un éther vinylique ou est nul,
R₂ est choisi parmi un groupement phényle ou un groupement biphényle avec deux oxygènes en position para l'un de l'autre.
A₁ et A₂ sont choisis indépendamment l'un de l'autre parmi un groupement cyano ou une chaîne alkyl linéaire de longueur variable de n-methyl à n-tétradécyl comportant aucun ou un ou deux centres asymétriques en alpha d'un oxygène aromatique et/ou d'une fonction ester comportant une chaîne aliphatique de un à quatre carbones. Si Y est un propène la fonction cyano est exclue.
R₁ et R₃ sont choisis indépendamment l'un de l'autre et sont nuls ou choisis parmi un phényle ou un O-phényle ou un cyclohexyl ou un phényle substitué par un groupement nitro ou métoxy placé en ortho des groupements A₁ ou A₂,
X₁ et X₂ sont choisis indépendamment l'un de l'autre parmi une fonction éther, une fonction ester ou un groupement azo,
Z est nul ou représente 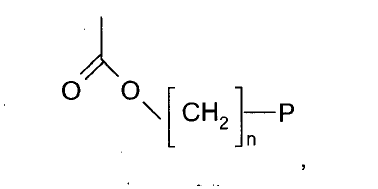
P groupement polymérisable, est choisi parmi un groupement éthylénique ou éther vinylique, ou de type acrylique quand Y est nul, ou parmi une fonction alcool ou méthyle quand Y est un propène ou un éther vinylique,
n est compris entre 2 et 10.

10. Matériau composite adaptatif selon la revendication précédente dans lequel le cristal liquide élastomère comprend au moins une chaîne de polymère liée à au moins un mésogène.

11. Matériau composite adaptatif selon la revendication précédente dans lequel la chaîne de polymère est un polysiloxane.

12. Matériau composite adaptatif selon l'une quelconque des revendications 9 à 11 dans lequel le mésogène est situé dans la chaîne de polymère de sorte que le cristal liquide élastomère est dit à chaîne principale.

13. Matériau composite adaptatif selon l'une quelconque des revendications 9 à 11 dans lequel le mésogène est greffé latéralement à la chaîne de polymère de sorte que le cristal liquide élastomère est dit à chaîne latérale en haltère.

14. Matériau composite adaptatif selon l'une quelconque des revendications 9 à 13 dans lequel le mésogène et/ou la chaîne polymère comprend au moins un agent de réticulation photochimique ou un agent de réticulation chimique.

15. Matériau composite adaptatif selon l'une quelconque des revendications 9 à 14 dans lequel le mésogène est nématique ou cholestérique.

16. Procédé de fabrication d'un matériau composite adaptatif selon l'une quelconque des revendications précédentes **caractérisé par le fait qu'**il comprend :
- Une première activation du matériau composite générant une contraction, une torsion ou un enroulement irréversible,
- Au moins une activation ultérieure du matériau composite générant une contraction ou une torsion ou un enroulement réversible et contrôlable qui s'ajoute à la première.

17. Procédé selon la revendication précédente d'un matériau composite adaptatif selon l'une quelconque des revendications 9 à 15 comprenant au moins une étape de réticulation chimique ou photochimique d'au moins deux mésogènes selon la formule I.

18. Procédé selon la revendication précédente comprenant au moins une étape préliminaire d'hydrosylilation d'au moins un mésogène selon la formule (I) et d'au moins une chaîne de polymère polysiloxane.

19. Procédé selon l'une quelconque des revendications 17 ou 18 dans lequel au moins un mésogène comprend au moins une fonction réticulable.

20. Procédé selon l'une quelconque des revendications 17 à 19 dans lequel au moins une chaîne polymère comprend au moins une fonction réticulable.

21. Procédé selon l'une quelconque des revendications 17 à 20 comprenant une étape de mise en forme comprenant au moins une étape de polymérisation partielle suivie d'au moins une étape de déformation mécanique suivie d'au moins une étape de polymérisation totale.

22. Procédé selon la revendication précédente dans lequel les polymérisations sont effectuées en phase anisotrope.

23. Procédé selon l'une quelconque des revendications 17 à 22 comprenant une étape d'élévation de la température en phase anisotrope sensiblement en-dessous de la température de transition anisotrope-isotrope pour contrôler l'orientation du cristal liquide élastomère.

24. Procédé selon l'une quelconque des revendications 17 à 23 dans lequel le cristal liquide élastomère est placé sur une ou entre deux lames traitées pour obtenir un ancrage planaire.

25. Procédé selon l'une quelconque des revendications 17 à 24 comprenant une étape de mise en forme comprenant une étape de filage dans laquelle la température de filage et l'étirement mécanique sont fonction l'un de l'autre.

26. Procédé selon la revendication 25 dans lequel la température d'étirement post-filage et l'étirement mécanique post-filage sont fonction l'un de l'autre.

## Patentansprüche

1. Adaptives Verbundmaterial, umfassend eine Verstärkung und eine Matrix, von denen wenigstens eines von ihnen wenigstens ein Elastomer-Flüssigkristall umfasst, **gekennzeichnet durch** die Tatsache, dass das Material eine Betätigerfunktion über einen Teil oder die Gesamtheit von sich selbst derart umfasst, dass eine Kontraktion oder eine Torsion oder eine irreversible Aufwicklung bei der der ersten Aktivierung und eine Kontraktion oder eine Torsion oder eine vorbestimmte, reversible und kontrollierbare Aufwicklung, die zu der ersten hinzukommt, bei allen folgenden Aktivierungen durchgeführt wird.

2. Adaptives Verbundmaterial gemäß dem voranstehenden Anspruch, umfassend einen Betätiger, der konfiguriert ist, um das Elastomer-Flüssigkristall von einem ersten anisotropen physikalischen Zustand in einen zweiten isotropen physischen Zustand übergehen zu lassen.

3. Adaptives Verbundmaterial gemäß Anspruch 1 bis 2, bei dem die Verstärkung und die Matrix Filme sind .

4. Adaptives Verbundmaterial gemäß Anspruch 1 bis 2, bei dem die Verstärkung oder die Matrix ein hohler Zylinder ist.

5. Adaptives Verbundmaterial gemäß Anspruch 1 oder 2, bei dem die Matrix oder die Verstärkung eine Faser und die Verstärkung oder die Matrix eine Elastomerhülle ist.

6. Adaptives Verbundmaterial gemäß Anspruch 1 oder 2, bei dem die Matrix oder die Verstärkung ein Faden ist.

7. Adaptives Verbundmaterial gemäß Anspruch 1 oder 2, das eine Textile bildet, umfassend eine kontrollierbare und reversible Aktivierung seiner Abmessungen.

8. Adaptives Verbundmaterial gemäß einem der voranstehenden Ansprüche, umfassend eine Sensorfunktion über einen Teil oder die Gesamtheit von sich selbst derart, dass eine Reflexion des anpassbaren Lichts in den Bereichen des Ultravioletts, des Sichtbaren oder des Infrarots aufgewiesen wird und durch eine mechanische Spannung abänderbar ist.

9. Adaptives Verbundmaterial gemäß einem der voranstehenden Ansprüche, bei dem wenigstens ein Elastomer-Flüssigkristall wenigstens ein Mesogen des Typs der Formel I umfasst: 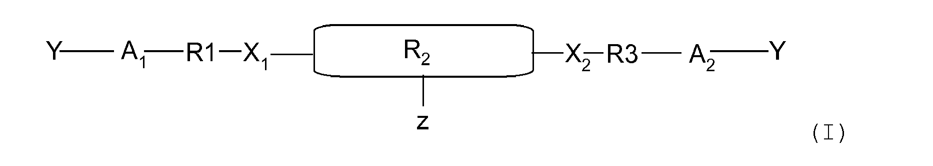
Y stellt ein Propen, ein Vinylether dar oder ist Null,
R₂ ist aus einer Phenyl-Gruppierung oder einer Biphenyl-Gruppierung mit zwei Sauerstoffmolekülen in Para-Position des einen und des anderen ausgewählt.
A₁ und A₂ sind unabhängig voneinander aus einer Cyano-Gruppierung oder einer linearen Alkylkette variabler Länge von N-Methyl bis N-Tetradecyl, umfassend kein oder ein oder zwei asymmetrische Zentren im Alpha eines aromatischen Sauerstoffmoleküls und / oder einer Esterfunktion, umfassend eine alphatische Kette von einem bis vier Kohlenstoffmolekülen. Wenn Y ein Propen ist, ist die Cyano-Funktion ausgeschlossen.
R₁ und R₃ sind unabhängig voneinander ausgewählt und sind null oder aus einem Phenyl oder einem O-Phenyl oder eine Cyclohexyl oder einem Phenyl ausgewählt, das durch eine Stickstoff- oder Metoxy-Gruppierung substituiert ist, die im Ortho der Gruppierungen A₁ oder A₂ platziert ist
X₁ und X₂ sind unabhängig voneinander aus einer Ether-Funktion, einer Ester-Funktion oder einer Stickstoff-Gruppierung ausgewählt,
Z ist null oder stellt dar 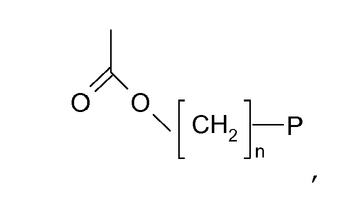
P als polymerisierbare Gruppierung ist aus einer ethylenischen oder Vinylether-Gruppierung oder vom acrylischen Typ, wenn Y null ist, oder aus einer Alkohol- oder Methylfunktion ausgewählt, wenn Y ein Propen oder ein Vinylether ist,
n ist zwischen 2 und 10 inbegriffen.

10. Adaptives Verbundmaterial gemäß dem voranstehenden Anspruch, bei dem das Elastomer-Flüssigkristall wenigstens eine Polymerkette umfasst, die mit wenigstens einem Mesogen verbunden ist.

11. Adaptives Verbundmaterial gemäß dem voranstehenden Anspruch, bei dem die Polymerkette ein Polysiloxan ist.

12. Adaptives Verbundmaterial gemäß Anspruch 9 bis 11, bei dem das Mesogen sich in der Polymerkette derart befindet, dass das Elastomer-Flüssigkristall eine so genannte Hauptkette ist.

13. Adaptives Verbundmaterial gemäß Anspruch 9 bis 11, bei dem das Mesogen lateral an die Polymerkette derart gepfropft ist, dass das Elastomer-Flüssigkristall eine so genannte laterale Kette in Hantelform ist.

14. Adaptives Verbundmaterial gemäß Anspruch 9 bis 13, bei dem das Mesogen und / oder die Polymerkette wenigstens einen photochemischen Vernetzungswirkstoff oder einen chemischen Vernetzungswirkstoff umfasst.

15. Adaptives Verbundmaterial gemäß Anspruch 9 bis 14, bei dem das Mesogen nematisch oder cholesterisch ist.

16. Herstellungsverfahren eines adaptiven Verbundmaterials gemäß einem der voranstehenden Ansprüche, **gekennzeichnet durch** die Tatsache, dass es umfasst:
- Eine erste Aktivierung des Verbundmaterials, die eine Kontraktion, eine Torsion oder eine irreversible Aufwicklung generiert,
- Wenigstens eine spätere Aktivierung des Verbundmaterials, die eine Kontraktion oder eine Torsion oder eine reversible und kontrollierbare Aufwicklung generiert, die zu der ersten hinzugefügt wird.

17. Verfahren gemäß dem voranstehenden Anspruch eines adaptiven Verbundmaterials gemäß Anspruch 9 bis 15, umfassend wenigstens eine chemische oder photochemische Vernetzungsstufe von wenigstens zwei Mesogenen gemäß der Formel I.

18. Verfahren gemäß dem voranstehenden Anspruch, umfassend wenigstens eine einleitende Hydrosilylierungsstufe von wenigstens einem Mesogen gemäß der Formel (I) und wenigstens einer Polysiloxan-Polymerkette.

19. Verfahren gemäß Anspruch 17 oder 18, bei dem wenigstens ein Mesogen wenigstens eine vernetzbare Funktion umfasst.

20. Verfahren gemäß Anspruch 17 bis 19, bei dem wenigstens eine Polymerkette wenigstens eine vernetzte Funktion umfasst.

21. Verfahren gemäß Anspruch 17 bis 20, umfassend eine Formgebungsstufe, umfassend wenigstens eine teilweise Polymerisationsstufe, gefolgt von wenigstens einer mechanischen Verformungsstufe, gefolgt von wenigstens einer totalen Polymerisationsstufe.

22. Verfahren gemäß dem voranstehenden Anspruch, bei dem die Polymerisationen in der anisotropen Phase durchgeführt werden.

23. Verfahren gemäß Anspruch 17 bis 22, umfassend eine Erhöhungsstufe der Temperatur in der anisotropen Phase deutlich unter der anisotropen-isotropen Übergangstemperatur zur Kontrolle der Ausrichtung des Elastomer-Flüssigkristalls.

24. Verfahren gemäß Anspruch 17 bis 23, bei dem das Elastomer-Flüssigkristall auf eine oder zwischen zwei Lamelle(n) platziert wird, die behandelt sind, um eine planare Verankerung zu erhalten.

25. Verfahren gemäß Anspruch 17 bis 24, umfassend eine Formgebungsstufe, umfassend eine Fadenziehstufe, in der die Fadenziehtemperatur und das mechanische Ziehen voneinander abhängen.

26. Verfahren gemäß Anspruch 25, bei dem die Ziehtemperatur nach dem Fadenziehen und das mechanische Ziehen nach dem Fadenziehen voneinander abhängen.

## Claims

1. An adaptive composite material comprising a reinforcement and a matrix with at least one of these comprising at least an elastomeric liquid crystal, **characterized in that** the material comprises an actuator function on all or part of itself, in order to perform an irreversible contraction or twisting or winding upon the first activation thereof and a predetermined, reversible and controllable contraction or twisting or winding, which adds to the first one, upon all the following activations.

2. An adaptive composite material according to the preceding claim comprising an actuator so configured as to make the elastomeric liquid crystal change from a first anisotropic physical state to a second isotropic physical state.

3. An adaptive composite material according to any one of claims 1 or 2, wherein the reinforcement and the matrix are films.

4. An adaptive composite material according to any one of claims 1 or 2, wherein the reinforcement or the matrix is a hollow cylinder.

5. An adaptive composite material according to any one of claims 1 or 2, wherein the matrix or the reinforcement is a fibre and the reinforcement or the matrix is an elastomeric sheath.

6. An adaptive composite material according to any one of claims 1 or 2, wherein the matrix or the reinforcement is a thread.

7. An adaptive composite material according to any one of claims 1 or 2, forming a fabric comprising a controllable and reversible activation of the dimensions thereof.

8. An adaptive composite material according to any one of the preceding claims comprising a sensor function on all or part of itself so as to provide a light reflection which can be adjusted in the ultraviolet, visible or infrared spectra and modified by a mechanical stress.

9. An adaptive composite material according to any one of the preceding claims, wherein at least one elastomeric liquid crystal comprises at least a mesogen of the type of formula I: 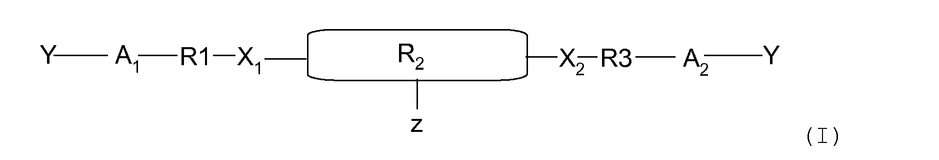
Y is propene, vinyl ether or is null,
R₂ is selected from a phenyl group or a biphenyl group with two oxygen atoms in para position relative to each other.
A₁ and A₂ are selected independently from each other from a cyano group or a linear alkyl chain variable in length from n-methyl to n-tetradecyl having no or one or two asymmetric centre(s) in alpha position of an aromatic oxygen and/or an ester function having an aliphatic chain of one to four carbons. If Y is a propene, the cyano function is excluded.
R₁ and R₃ are selected independently from each other and are null or selected from a phenyl or an 0-phenyl or a cyclohexyl or a phenyl substituted by nitro or methoxy groups in ortho position of the A₁ or A₂ groups,
X₁ and X₂ are selected independently from each other from an ether function, an ester function or an azo group,
Z is null or is 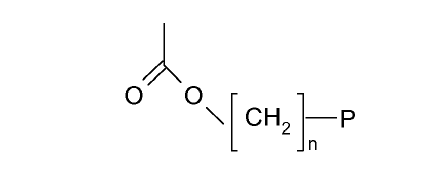
The polymerizable group P is selected from an ethylene or vinyl ether group, or a group of the acrylic type when Y is null, or from an alcohol or a methyl function when Y is a propene or a vinyl ether,
n is between 2 and 10.

10. An adaptive composite material according to the preceding claim, wherein the elastomeric liquid crystal comprises at least a polymer chain bonded to at least a mesogen.

11. An adaptive composite material according to the preceding claim, wherein the polymer chain is a polysiloxane.

12. An adaptive composite material according to any one of claims 9 to 11, wherein the mesogen is located in the polymer chain so that the elastomeric liquid crystal is called a main chain crystal.

13. An adaptive composite material according to any one of claims 9 to 11, wherein the mesogen is grafted laterally with respect to the polymer chain so that the elastomeric liquid crystal is called a side chain side-on liquid crystal.

14. An adaptive composite material according to any one of claims 9 to 13, wherein the mesogen and/or the polymer chain comprises at least one photo-chemical cross-linking agent or a chemical cross-linking agent.

15. An adaptive composite material according to any one of claims 9 to 14, wherein the mesogen is nematic or cholesteric.

16. A method for producing an adaptive composite material according to any one of the preceding claims, **characterized in that** it comprises:
- a first activation of the composite material generating an irreversible contraction, twisting or winding,
- at least one subsequent activation of the composite material generating a reversible and controllable contraction or twist or winding, which adds to the first one.

17. A method according to the preceding claim of an adaptive composite material according to any one of claims 9 to 15 comprising at least a step of chemical or photochemical cross-linking of at least two mesogens according to formula I.

18. A method according to the preceding claim comprising at least one preliminary step of hydrosilylation of at least one mesogen according to formula (I) and at least one polysiloxane polymer chain.

19. A method of any one of claims 17 or 18, wherein at least one mesogen comprises at least one cross-linkable function.

20. A method according to any one of claims 17 to 19, wherein at least one polymer chain comprises at least one cross-linkable function.

21. A method according to any one of claims 17 to 20 comprising a step of forming comprising at least a step of partial polymerization followed by at least one step of mechanical deformation, followed by at least one step of total polymerization.

22. A method according to the preceding claim, wherein the polymerizations are carried out in the anisotropic phase.

23. A method according to any one of claims 17 to 22 comprising a step of temperature increase in the anisotropic phase substantially below the temperature of the anisotropic-isotropic transition to control the orientation of the elastomeric liquid crystal.

24. A method according to any one of claims 17 to 23, wherein the elastomeric liquid crystal is placed on one or between two plate(s) processed to obtain a planar anchoring.

25. A method according to any one of claims 17 to 24 comprising a step of forming including a step of spinning wherein the spinning temperature and the mechanical stretching depend on each other.

26. A method according to claim 25, wherein the post-spinning stretching temperature and the post-spinning mechanical stretching depend on each other.
